# EUROPEAN PATENT APPLICATION

(11) **EP 1 460 863 A1**
(43) Date of publication of application: **22.09.2004**
(21) Application number: 03290705.7
(22) Date of filing: 19.03.2003
(51) Int. Cl.: H04Q 3/00

(54) **Message analysis in a signaling application server**

(71) Applicant: ALCATEL, 75008 Paris (FR)
(72) Inventor: Blachut, Stephan, 71254 Ditzingen (DE); Hein, Reinhard, 74369 Löchgau (DE); Milbredt, Thomas, 71229 Leonberg (DE); Stahl, Bernd, 71229 Leonberg (DE); Zieg, Ralf, 70435 Stuttgart (DE)
(74) Representative: Menzietti, Domenico, Dipl.-Ing

(57) **Abstract**

It is an object of the invention to provide an advantageous inbound message analysis method. An inventive inbound message analysis for a SAS application service includes several steps. In each step one parameter is analyzed. Each analysis is performed using a configurable table. Each configuration table can easily be re-configured allowing the whole system to be very flexible and to be adapted to specific requirements via simple software reprogramming. The inbound digit analysis for e.g. a SCCP (signaling connection control part) service includes performing an application specific inbound protocol check, performing a GTI (Global Title Indicator) analysis, performing a NoAl (Nature of Address Indicator) analysis using a NoAl configuration table, and performing an inbound digit anaylsis using an input digit string configuration table.

## Description

### TECHNICAL FIELD OF THE INVENTION

This invention is related in general to the field of telecommunications systems. More particularly, the invention is related to a SS7 signaling server and method for routing SS7 links in a telecommunications
network. More particularly, the invention is related to a SAS Inbound Digital Analysis. The invention is related to the european patent applications EP 02360267.5 and EP 02360268.3 which hereby are incorporated by reference.

### BACKGROUND OF THE INVENTION

A SS7 signaling server for routing SS7 links includes a signaling transfer point (STP) and a signaling application server (SAS). The SAS is capable to process at least one application process. Each application process, e.g. an individual INAP, MAP, CAP, or any TCAP User, TCAP Relay, or SCCP Relay service request has to be identified and processed. Before processing an inbound message analysis has to be performed.
The SS7 signaling server for routing SS7 links, includes e.g. a signaling transfer point (STP) and a signaling application server (SAS); SS7 = Signaling System No. 7. STP and SAS have different functionalities. The STP has at least one external interface to connect the STP via at least one SS7 link to at least one telecommunications unit, and an internal interface to connect the STP to the SAS. The STP processes incoming SS7 messages, e.g. in the MTP1, MTP2, MTP3, and SCCP layer. The SAS is capable to process at least one application service request, advantageously at least two different application service requests. The STP identifies a single application service request in one incoming SS7 message and provides the identified single application service request to the SAS for further processing. The SAS has e.g. two TCAP processes to identify two different application services, e.g. INAP and MAP. STP and SAS are interconnected via an internal interworking protocol, e.g. using TCP/IP (transmission control protocol/internet protocol). The interworking protocol is called Advanced Signaling Transport Protocol (ASTP).

The signaling server is e.g. highly configurable and efficient regarding run-time. The signaling server is capable of processing multiple application service requests, e.g. mobile number portability (MNP), service number portability (SNP), screening, intelligent network (IN) services, TCAP services, MAP services, CAP services, TCAP Relay, TCAP User Relay, SCCP Relay.

The SS7 signaling server for routing SS7 links, includes e.g. a signaling transfer point (STP) and a signaling application server (SAS),
wherein the STP has at least one external interface to connect the STP via at least one SS7 link to at least one telecommunications unit, and an internal interface to connect the STP to the SAS,
wherein the SAS is capable to process at least one service requst, advantageously at least two different application service requests, and
wherein the STP is capable to process incoming SS7 messages, to identify a single application service request in one incoming SS7 message, to provide the identified single application service request to the SAS for further processing.

### SUMMARY OF THE INVENTION

It is an object of the invention to provide an advantageous inbound message analysis method.

An inventive inbound message analysis for a SAS application service includes several steps. In each step one or more parameter are analyzed. Each analysis is performed using a configurable table. Each configuration table can easily be re-configured allowing the whole system to be very flexible and to be adapted to specific requirements via simple software reprogramming.

The inbound digit analysis for e.g. a SCCP (signaling connection control part) service includes performing an application specific inbound protocol check, performing a GTI (Global Title Indicator) analysis, performing a NoAI (Nature of Address Indicator) analysis using a NoAI configuration table, and performing an inbound digit anaylsis using an input digit string configuration table.
The inbound digit analysis allows e.g. to analyze the called or calling party address depending on service indicator, nature of address, country code, internetwork routing number, internal network prefix, national part 1, network infix, national part 2, postfix and general access code. Depending on the result the database access is performed.

The inventive inbound message analysis has the advantage that it is highly configurable, and that it is possible to adapt service in a very easy way to e.g. different mobile networks. It could be used independently from the hardware structure, the topology of the network and the servers used.

The inventive method to perform an inbound message analysis for a SAS application service, comprises the steps of:
performing an application specific inbound protocol check,
performing a NoAI (Nature of Address Indicator) analysis using a NoAI configuration table,
performing an inbound digit anaylsis using an input digit string configuration table.

The application specific inbound protocol check serves to check whether the relevant parameters are present and could be decoded.

In a preferred embodiment of the invention the method comprises the further step of performing a GTI (Global Title Indicator) analysis using the NoAI configuration table before performing the inbound digit anaylsis.

In a further preferred embodiment of the invention the inbound digit analysis serves to analyze the called ot the calling party address, and the input digit string configuration table includes at least two of the following parameters: SAS Application Service Id, Input Digit String Id, Auxiliary Number Name, Global Title Indicator, Nature of Address Indicator, Auxiliary Number Presence, Auxiliary Number Position.

Allowed Auxiliary Number Names could be at least two of the following: service indicator, country code, internetwork routing number, internal network prefix, complete national significant portion of the number, internal network infix, and general access code.

Anvantageously the inbound digit analysis includes a Head Analysis, a Tail Analysis if Tail Part present, a BigCore Analysis if BigCore Part present, and a concatenation of all found Core Parts.

The inventive method to perform an analysis for a SAS application service, comprises the steps of:
performing a specific inventive inbound message analysis,
performing a Service Decision,
performing an Outbound Message Synthesis.

An inventive Signaling application server (SAS), comprises at least one processor, at least one database and at least one processing software for processing at least one application service request, wherein the at least one processing software is programmed in such a way that identifying and processing at least one application service request is enabled - e.g. including a signaling connection control part (SCCP) process and at least one transaction capabilities application part (TCAP) process to identify at least one application service request - , and wherein processing a SAS application service, comprises the steps of:
performing a specific inventive inbound message analysis,
performing a Service Decision including a database search,
performing an Outbound Message Synthesis.

An inventive SS7 signaling server for routing SS7 links, includes a signaling transfer point (STP), and a signaling application server (SAS),
wherein the STP has at least one external interface to connect the STP via at least one SS7 link to at least one telecommunications unit, and an internal interface to connect the STP to the SAS,
wherein the SAS comprises at least one processor, at least one database and at least one processing software for processing at least one application service request, wherein processing a SAS application service, comprises the steps of:
performing a specific inventive inbound message analysis,
performing a Service Decision,
performing an Outbound Message Synthesis, and
wherein the STP is capable to process incoming SS7 messages, to identify a single application service request in one incoming SS7 message, to provide the identified single application service request to the SAS for further processing.

### BRIEF DESCRIPTION OF THE DRAWINGS

For a better understanding of the present invention, reference is made to the accompanying drawings, in which:
- FIG. 1: shows the structure of an IMSI (International Mobile Subscriber Identity);
- FIG. 2: shows the structure of a MGT (Mobile Global Title);
- FIG. 3: shows the Reference Configuration of Interfaces to SAS Databases;
- FIG. 4: shows the Generic Structure of a SAS Application Service;
- FIG. 5: shows a flowchart of an Inbound Address Analysis and Inbound Digit Analysis;
- FIG. 6: shows a flowchart of an Analysis of the Global Title Indicator and the Nature of Address Indicator;
- FIG. 7: shows a flowchart of an Inbound Digit Analysis;
- FIG. 8: shows a flowchart of a Head Analysis - Overview;
- FIG. 9: shows a flowchart of a Tail Analysis - Overview;
- FIG. 10: shows a flowchart of a Big Core Analysis - Overview;
- FIG. 11: shows a flowchart of the Analysis NotAllowed;
- FIG. 12: shows a flowchart of the Analysis Service Indicator;
- FIG. 13: shows a flowchart of the Analysis Escape Code;
- FIG. 14: shows a flowchart of the Analysis Escape Code 1;
- FIG. 15: shows a flowchart of the Analysis Escape Code 2;
- FIG. 16: shows a flowchart of the Analysis Country Code;
- FIG. 17: shows a flowchart of the Analysis Country Code (CC) MATCH;
- FIG. 18: shows a flowchart of the Analysis Country Code (CC) AMBIGUOUS;
- FIG. 19: shows a flowchart of the Analysis Country Code (CC) NO MATCH;
- FIG. 20: shows a flowchart of the Analysis Country Code (CC) Database (DB) Error;
- FIG. 21: shows a flowchart of the Analysis Mobile Country Code;
- FIG. 22: shows a flowchart of the Analysis Inter-Network Routing Number;
- FIG. 23: shows a flowchart of the Analysis Voice Mail Service Center - Internal Network Prefix;
- FIG. 24: shows a flowchart of the Analysis Generic Access Code;
- FIG. 25: shows a flowchart of the Analysis National Destination Code;
- FIG. 26: shows a flowchart of the Analysis Mobile Network Code;
- FIG. 27: shows a flowchart of the Analysis Network Code;
- FIG. 28: shows a flowchart of the Analysis Nat1;
- FIG. 29: shows a flowchart of the Analysis Voice Mail Service Center - Internal Network Infix;
- FIG. 30: shows a flowchart of the Analysis Subscriber Number;
- FIG. 31: shows a flowchart of the Analysis Mobile Subscriber Identification Number;
- FIG. 32: shows a flowchart of the Analysis Nat2;
- FIG. 33: shows a flowchart of the Analysis Nat; and

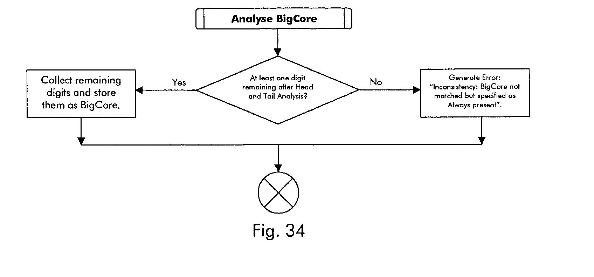

- FIG. 34: shows a flowchart of the Analysis BigCore.

### DETAILED DESCRIPTION OF THE INVENTION

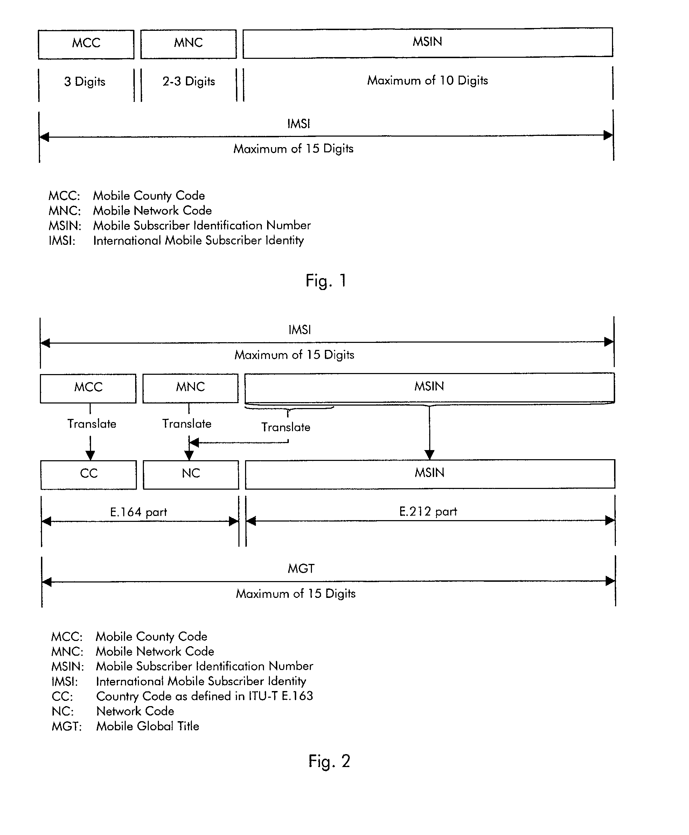

The preferred embodiments of the present invention are illustrated in FIGS. 1-16, like reference numerals being used to refer to like and corresponding parts of the various drawings.

### 1. Data Received by the SAS Service Logic

Advantageously two kinds of addresses can be received and analyzed by the SAS service logic, both on application layer level as well as on SCCP level:
- E.164 addresses.
- MSIN based addresses.

Instead of these two other or additional types of addresses could be processed if an appropriate configuration is performed.

### 1.1 E.164 Address

Two kinds of E.164 addresses are possible:
- An E.164 address belonging to a dialled number.
- An E.164 address representing a Service Centre Address (SCA) of a network node, such as an exchange, HLR, SCP etc.

### 1.1.1 E.164 Address Belonging to a Dialled Number

A SAS Application Service receives E.164 addresses from one or more protocol parameters. Each received E.164 address has to be analyzed and a response action has to be generated accordingly. In the SAS, this is done in the following three stages:
1. Inbound Message Analysis.
2. Service Decision.
3. Outbound Message Synthesis.

Inbound Message Analysis in turn performs the following two tasks:
- Protocol checks.
- Address Analysis for each relevant parameter in the received message.

For the purpose of the SAS Application Services, an E.164 address has the following structure:
- A TCAP User E.164 Address includes Numbering Plan, Nature of Address Indicator and Digit String. In most cases, the TCAP User E.164 Address has exactly these three fields. The various TCAP user standards use sometimes synonyms for these three terms.
- A SCCP E.164 Address includes Global Title Indicator, Numbering Plan, Nature of Address Indicator and Global Title Address Information (i.e. Digit String). A SCCP E.164 Address includes course of many more fields, however, for the current address analysis in the SAS Application Services only the above four fields are required. Future requirements may make it necessary, to include further fields of the SCCP E.164 Address.

The analysis of this E.164 address includes the following parts:
1. Analysis of the Numbering Plan (NP). This is done implicitly by the respective SAS Application Service, as it is assumed, that a given SAS Application Service manipulates only addresses of a single Numbering Plan. For the E.164 SAS Application Services the Numbering Plan is always E.164. For the E.212 SAS Application Services the Numbering Plan is always E.212. Etc.
2. Analysis of the Global Title Indicator (GTI). This is only required for SCCP addresses. The value of the Global Title Indicator can vary with the received SS7 messages. The current value of the GTI in combination with the current value of NoAI determines the current structure of the digit string.
3. Analysis of the Nature of Address Indicator (NoAI). The value of the Nature of Address Indicator can vary with the received SS7 messages. The current value of the GTI in combination with the current value of NoAI determines the current structure of the digit string.
4. Analysis of the digit string.

The result of the Input Digit String Analysis is the current received structure of the Input Digit String, plus the Core part of the Input Digit String, which is to be used during Service Decision as search string against the Single Number and Range Number Tables. This Core part is a subpart of the received 164 digit string.

As long as the Advanced Signalling Services on the SAS have only a national scope, the Core part will in general include the National Significant portion of the complete received digit string. However, as soon as the Advanced Signalling Services on the SAS get an international scope, the Core part used to query the Single Number and Range Number Tables will contain other components in addition to the National Significant portion.

The following two sub-chapters specify the structure of the Digit Strings for above two cases respectively.

Notes:
- For each SAS Application Service it shall be possible to configure one or more E.164 input digit strings on the basis of the general abstract structure of a received E.164 input digit string above. The code of the respective SAS Application Service associates each E.164 input digit string with a corresponding protocol parameter (e.g. the MSISDN parameter of the MAP_SEND_ROUTING_INFORMATION indication) from which it is retrieved. Even multiple input digit strings per protocol parameter are possible. The details of how the input digit strings are configured can be found in 1.4.
- This chapter refers to the E.164 input digit string. The corresponding ITU-T standard allows only 15 digits for an E.164 number. However, the input string can of course be longer than 15 digits, as it may be a national / operator specific modified E.164 number. In Germany, we have up to 28 digits in the network, for Great Britain there exists a requirement for 32 digits. No upper limit is in sight.
- Strictly speaking, E.164 applies to international aspects only. Numbers interchanged in national networks might have more than 15 digits. However, the received number (perhaps more than 15 digits) does not have an effect on the size of the numbers stored in the E.164 Single Number and Range tables, as these numbers correspond to the national significant part only. Here we assume the 15 digits for SAS Phase 1. However, it should be possible in the future to have the maximum digit length configurable, even beyond the 15 digits.

### 1.1.1.1 Digit Strings for Advanced Signalling Services With National Scope

In general, the national significant portion of an E.164 digit string includes two parts, here called Nat1 and Nat2. An example for Nat1 may be the National Destination Code (NDC), an example for Nat2 may be the Subscriber Number (SN). Secondly, in some cases, the national significant portion of an E.164 number includes only one integral part, here called Nat. Thirdly, it may be possible, that a SAS Application Service does not need to separate Nat1 and Nat2 in the received input digit string. In this case, the national significant portion of the received E.164 input digit string is also called Nat and includes the concatenation of Nat1 and Nat2.

The complete input digit string may contain many non-National components, such as an E.164 Country Code, an Inter Network Routing Number, an Internal Network Prefix, an Internal Network Infix, etc. It is therefore necessary to define how the received sequence of digits is analysed in order to derive the digit sequence, which is relevant for the query into the E.164 Single Number table or Range Number table. The digit analysis follows a progression of analysis steps on the received complete digit string, starting from the most significant digit to the least significant digit.

The general abstract structure of a received E.164 digit string belonging to a dialled number is one of the following three general structure options:
1. {Prefix-0} {Prefix-1} ... {Prefix-k} Nat1 {Infix-0} {infix-1} ... {Infix-m} Nat2 {Postfix-0} {Postfix-1} ... {Postfix-n},
2. {Prefix-0} {Prefix-1} ... {Prefix-k} Nat {Postfix-0} {Postfix-1} ... {Postfix-n},
3. {Prefix-0} {Prefix-1} ... {Prefix-k} {Postfix-0} {Postfix-1} ... {Postfix-n},
where
- All items listed in {} are auxiliary parts of the received E.164 number. I.e. they are not used in the query against the E.164 single number table or range number table. Rather the respective SAS Application Service cuts them out of the received E.164 digit string, stores them internally, and if required, integrates them again into the E.164 output digit string. The Auxiliary Parts are recognised and removed from the input digit string by means of queries in the Auxiliary Number Table during the digit analysis phase of the input digit string. In some cases the auxiliary parts are also used in internal decisions of the service logic of the respective SAS Application Service.
- All items without {} are core parts of the received E.164 number. I.e. they are used in the query against the E.164 single number table or range number table. The respective SAS Application Service also stores Nat, Nat1 and Nat2 internally, and if required, integrates them again into the E.164 output digit string.
- {Prefix-κ} = a prefix digit sub-string.
- {Infix-µ} = an infix digit sub-string.
- {Postfix-ν} = a postfix digit sub-string.
- Nat1 = 1^{st} part of the National Significant portion of the Subscriber Number.
- Nat2 = 2^{nd} part of the National Significant portion of the Subscriber Number.
- Nat = National Significant portion of the Subscriber Number.

The parts Nat, Nat1 and Nat2 are called core parts of the received E.164 digit string. The core parts are used in the query against the E.164 single number table or range number table, either Nat or the concatenation of Nat1 and Nat2.

All prefixes, infixes and postfixes are the auxiliary parts. Prefixes, infixes and postfixes do not yet have specific names in this representation. They only have a position, defined by their type (prefix, infix, and postfix) and by an integer number. Each auxiliary part has also a name. The possible names for each auxiliary part are introduced in the concrete structures of the E.164 input digit strings belonging to a dialled number, which can be received and analysed by a SAS Application Service. It is illustrated by the following most common structure option examples:
Structure Option 1: [SI] [EC] [CC] [INRN] [INP] Nat1 [INI] Nat2 [Postfix], or
Structure Option 2: [SI] [INRN] [EC] [CC] [INP] Nat1 [INI] Nat2 [Postfix], or
Structure Option 3: [SI] [EC] [CC] [INRN] [INP] Nat [Postfix], or
Structure Option 4: [SI] [INRN] [EC] [CC] [INP] Nat [Postfix], or
Structure Option 5: [SI] [EC] [CC] [INRN] GAC [Postfix], or
Structure Option 6: [SI] [INRN] [EC] [CC] GAC [Postfix],
where
- All items listed in [] are optional, all other items are mandatory.
- [SI] = Service Indicator for IN services.
- [EC] = Escape Code, e.g. in some countries "0" for a non-local national call, and "00" for an international call.
- [CC] = E.164 Country Code.
- [INRN] = Inter Network Routing Number.
- [INP] = An Internal Network Prefix, such as a Voice Mail Prefix.
- Nat1 = 1^{st} part of the National Significant portion of the Subscriber Number.
- [INI] = An Internal Network Infix, such as a Voice Mail Infix.
- Nat2 = 2^{nd} part of the National Significant portion of the Subscriber Number.
- [Postfix] = Postfix
- Nat = National Significant portion of the Subscriber Number.
- GAC = General Access Code, i.e. a general access number used to identify specific network services such as voice mail retrieval.

The mandatory parts are Nat, Nat1, Nat2 and GAC. All other parts are optional. The optional parts plus the mandatory part GAC belong all to the Auxiliary Parts. The mandatory parts Nat, Nat1 and Nat2 belong to the core parts.

For the auxiliary parts, the following conditions must hold:
- For each auxiliary part, the maximum length is 15 digits. This restriction is due to current dimensioning limits. This limit should not introduce a problem in the mid-term. It is allowed, however, that the instances of an auxiliary part differ in their length, as long as they do not surpass the defined maximum length of 15 digits.
- It must be possible that a digit sequence including auxiliary parts and core parts can be unambiguously analysed. This requirement is absolutely necessary, as an auxiliary part may not always be present, and its presence or absence must be unambiguously distinguishable in the number sequence.
- It is desirable that the allowed numbers of a given auxiliary part are distinguishable by leading digits. I.e. if the number 1234 is an existing auxiliary number, then 12341 must not be an auxiliary number and vice versa. If the numbers of an auxiliary part all have the same length, then this condition is always fulfilled. However, this requirement may not always be achievable, e.g. for EC, 0 and 00 are not distinguishable by leading digits. This is not a problem, but has impact on the search algorithm of the Auxiliary Table: the search must go from the greatest number to the smallest in order to find the correct match. E.g. 00 must be tested before 0.

### 1.1.1.2 Digit Strings for Advanced Signalling Services Beyond National Scope

Digit Strings beyond national scope are a generalisation of the Digit Strings within national scope. The generalisation specified in this chapter can of course also be used within national scope. The general abstract structure of the Digit String is one of the following two general structure options:
1. {Head-0} {Head-1} {Head-2} ... {Head-m} BigCore {Tail-n} ... {Tail-2} {Tail-1} {Tail-0}
2. {Head-0} {Head-1} {Head-2} ... {Head-m}
where
- All items listed in {} are parts of the received E.164 number, which can be analysed by the Auxiliary Number Table. They contain both true Auxiliary Numbers and Core Part numbers. The set of allowed Auxiliary Numbers per Auxiliary Number Name is small and the Auxiliary Numbers are usually short, i.e. no longer than 4 digits. The Core Part numbers in {} have the same properties as the Auxiliary Numbers, i.e. the set of allowed Core Part numbers per Core Part Name is small and these Core Part numbers are usually short, i.e. no longer than 4 digits. This implies that the Auxiliary Number Table will contain true Auxiliary Numbers and additionally the small Core Part numbers.
- In the centre of digit string option 1 there is the BigCore number. This number can be longer than 4 digits, the set of allowed numbers for BigCore is very large. Additionally, the actual length of the Big Core part may not be known. The BigCore is often the Subscriber Number in the digit string. This implies that the BigCore cannot be analysed in the Auxiliary Number Table. Rather it is part of the Core Part contained and distributed in the received Digit String. At maximum only one BigCore can be present in an Input Digit String, as two or more BigCore parts cannot be found uniquely.
- There may be Core Parts, which are not small but where the length is fixed. These kinds of Core Part are configured as part of the Head and/or Tail and can be modelled in the Auxiliary Number Table, using for instance the Offset value. A possibility, how this can be done is added as a comment to the Auxiliary Number Table. Additionally, the search algorithm for the Auxiliary Number Table has to be adapted to cope with this situation. However, this principle is not further specified in this document, and the search algorithm of the Auxiliary Number Table is not yet modified.
- The number parts before the BigCore are called Head numbers and are sorted with increasing index. The number parts after the BigCore are called Tail numbers and are sorted with decreasing index.
- All true Auxiliary Numbers are not used for the query during the Service Decision stage. Rather the respective SAS Application Service cuts them out of the received E.164 digit string, stores them internally, and if required, integrates them again into the E.164 output digit string. The Auxiliary Parts are recognised and removed from the input digit string by means of queries in the Auxiliary Number Table during the digit analysis phase of the input digit string. In some cases the auxiliary parts are also used in internal decisions of the service logic of the respective SAS Application Service.
- All Core Part numbers in the Head and Tail are analysed with the Auxiliary Number Table, cut out of the Input Digit String and stored internally. If required they can be integrated again into the Output Digit String.
- All core parts in {} plus the BigCore are concatenated in their proper order after the Input Digit String Analysis, and then as a whole used to query the Single Number and Range Number Table.
- Digit String option 2 contains only Head numbers. These Head numbers can contain both true Auxiliary Numbers and small Core Part numbers. All Head numbers can be analysed using the Auxiliary Number Table. The Core Part numbers have then to be concatenated and used for the query against the Single Number and Range Number Tables in the Service Decision stage.
- {Head-µ} = a head digit sub-string, containing either a true Auxiliary Number or a small Core Part number.
- {Tail-ν} = a tail digit sub-string, containing either a true Auxiliary Number or a small Core Part number.
- BigCore = The BigCore part.

A concrete example of this generic structure may be the following:
[SI] [EC] CC [INRN] Nat1 [INI] Nat2 [Postfix],
where
- All items listed in [] are optional, all other items are mandatory.
- [SI] = Service Indicator for IN services: Head number, Auxiliary Number.
- [EC] = Escape Code, e.g. in some countries "0" for a non-local national call, and "00" for an international call: Head number, Auxiliary Number.
- CC = E.164 Country Code: Head number, Small Core Part Number.
- [INRN] = Inter Network Routing Number: Head number, Auxiliary Number.
- Nat1 = 1^{st} part of the National Significant portion of the Subscriber Number: Small Core Part number, Auxiliary Number.
- [INI] = An Internal Network Infix, such as a Voice Mail Infix: Head Number, Auxiliary Number.
- Nat2 = 2^{nd} part of the National Significant portion of the Subscriber Number: BigCore.
- [Postfix] = Postfix: Tail number, Auxiliary Number.

Such a number may be used in a common Number Portability system for two small countries, where the queries against the Single Number and Range Number tables have to include the Country Code.

For the Head and Tail parts, the following conditions must hold:
- For each Head or Tail part, the maximum length is 15 digits. This restriction is due to current dimensioning limits. This limit should not introduce a problem in the mid-term. It is allowed, however, that the instances of a Head or Tail part differ in their length, as long as they do not surpass the defined maximum length of 15 digits.
- It must be possible that a digit sequence including Head and Tail parts plus possibly the BigCore can be unambiguously analysed. This requirement is absolutely necessary, as a Head, Tail or BigCore part may not always be present, and its presence or absence must be unambiguously distinguishable in the number sequence.
- It is desirable that the allowed numbers of a given Head or Tail part are distinguishable by leading digits. I.e. if the number 1234 is an existing Head or Tail part, then 12341 must not be a Head or Tail part and vice versa. If the numbers of a Head or Tail part all have the same length, then this condition is always fulfilled. However, this requirement may not always be achievable, e.g. for EC, 0 and 00 are not distinguishable by leading digits. This is not a problem, but has impact on the search algorithm of the Auxiliary
Table: the search must go from the greatest number to the smallest in order to find the correct match. E.g. 00 must be tested before 0.

The flexible general abstract structure above constitutes the basis of the digit string handling for the SAS as specified in other parts of the document.

### 1.1.2 E.164 Address Containing a Service Center Address

The digit string of a Service Center Addresses (SCA) can be defined by the following structure.
P₁...Pₙ XXX N₁...Nₙ, where
P₁ ... Pₙ Prefix
XXX Operator-ID
N₁...Nₙ Exchange-ID

### 1.2 MSIN Based Address

A SAS Application Service receives MSIN based addresses from one or more protocol parameters. Each received MSIN based address has to be analysed and a response action has to be generated accordingly. The analysis of the MSIN based address has two basis parts: first the analysis of the NoAI and the NP, secondly the analysis of the digit string. The current value of the NoAI determines the current structure of the digit string.

A received MSIN based digit string can either be an IMSI (E.212 number) or a MGT (E.214 number). MSIN based digits strings are used by the Flexible Routing Services for mobile networks only.

MSIN based input digit strings are configured in the same way as the E.164 input digit strings, using the general abstract structure. MSIN based input digit strings are associated to a protocol parameter from where they are received in the same way by the code of the respective SAS Application Service, as the E.164 input digit strings.

### 1.2.1 International Mobile Subscriber Identity (IMSI)

An IMSI identifies a mobile terminal or mobile user and is used to enable these terminals and users to roam among public networks, which offer mobility services. It is desirable that the allocation of IMSIs should be made independently of the numbering plans used for accessing mobile terminals and mobile users, such as E.164 numbers.

Figure 1 depicts the structure of an IMSI. An IMSI is a string of decimal digits, up to a maximum of 15 digits, that identifies a unique mobile terminal or mobile subscriber internationally. The IMSI includes three fields:
- The Mobile Country Code (MCC) is the first field of the IMSI and is three digits in length. An MCC identifies either a country or a group of networks that share an MCC for international services.
- The Mobile Network Code (MNC) is the second field of the IMSI and is two to three digits in length. The MNC, in combination with the MCC, uniquely identifies the home network of the mobile terminal or mobile user. Additional MNCs are assigned to networks only for exhaust of the assigned code(s).
- The Mobile Subscriber Identification Number (MSIN) is the third field of the IMSI and is a maximum of 10 digits. The MSIN, within a given MCC+MNC, identifies a unique mobile terminal or mobile subscriber within a public network.

Figure 1 shows the Structure of an IMSI.

With respect to the Flexible Routing Service for mobile networks the following cases need to be distinguished for E.212 IMSIs:
1 The FLR service applies to a network with only a single MNC: in this case the MSIN is sufficient to access the Single Number and Range Number tables of the FLR MSIN database.
2 The FLR service applies to a network with multiple MNCs:
2.1 Flexibility of routing is required only within one MNC: in this case the MSIN is sufficient to access the Single Number and Range Number Tables of the FLR service.
2.2 Flexibility of routing is required to cover all MNCs of the operator: in this case the MNC plus the MSIN is required to access the Single Number and Range Number Tables of the FLR service.

If the MSIN is sufficient to access the Single Number and Range Number Tables, then 10 digits are required for the MSIN based number tree. If the MNC is required in addition to the MSIN, then 12 digits are required for the respective MNC+MSIN number tree.

The IMSI input string is very simple. The concrete structure of the IMSI input digit string of the mobile network FLR service is as follows:
Structure Option 1: [MCC] [MNC] MSIN
Structure Option 2: [MCC] MNC MSIN
where
- All items listed in [] are optional, all other parts are mandatory.
- [MCC] = Mobile Country Code.
- [MNC] or MNC = Mobile Network Code.
- MSIN = Mobile Subscriber Identification Number

The MSIN is the mandatory part. Therefore, it is queried in the MSIN based Single Number and/or Range Number Table. In some networks, it is possible that the MNC has to be used together with the MSIN to query the Single Number and/or Range Number Table. This option has to be reflected in the configuration data.

For the optional number part the conditions must hold:
- For each optional number part, the maximum length is 15 digits. It is allowed, however, that the instances of an optional part differ in their length, as long as they do not surpass the defined maximum length.
- The numbers within each optional part must distinguish by leading digits. If the numbers of an optional number part all have the same length, then this condition is always fulfilled.
- A sequence of optional parts possibly followed by a mandatory part must as a whole distinguish by leading digits. This requirement is absolutely necessary, as optional part may not always be present, and their presence or absence must be unambiguously distinguishable by the number sequence.

For the IMSI, the mandatory parts are always the core parts in the corresponding general abstract structure. In the same way, the optional parts are always the auxiliary parts in the corresponding general abstract structure.

### 1.2.2 MGT

The Mobile Global Title (MGT) is used to control SCCP routing of messages related to the roaming of mobile stations. It is derived from the IMSI. The IMSI is the only information available to find the HLR of the roaming mobile station.

Figure 2 depicts the structure of a MGT. The MGT is a variable length string of decimal digits arranged in two specific parts: the E.164 part and the E.212 part. The maximum length of the MGT is 15 digits.
- The E.164 part is used to identify the country and the PLMN, plus possibly the HLR, where the mobile station is registered. The E.164 part includes:
   - The Country Code (CC) as defined in ITU-T E.163. The CC is derived directly from the MCC of the IMSI.
   - The Network Code (NC), which can be a National Destination Code (NDC), as defined in ITU-T E.164, or the NDC and some additional E.164 digits. The NC identifies either the PLMN or the HLR within a PLMN. The number of E.164 digits required for identification may vary from network to network. The NC is derived from the MNC plus possibly some initial digits from the MSIN.
- The E.212 part is used to identify the mobile station plus possibly the HLR where the mobile station is registered. The E.212 part includes the MSIN as defined in E.212. The MSIN of the IMSI is directly mapped into the MSIN part of the MGT, up to its maximum length, i.e. if necessary the least significant digits of the MSIN will be omitted in order to conform with the maximum length of the MGT.

Figure 2 shows the Structure of a MGT.

With respect to the Flexible Routing Service for mobile networks the following cases need to be distinguished for E.214 MGTs:
1 The FLR service applies to a network with only a single NC:
   1.1 The MGT contains always the complete MSIN: in this case the MSIN is sufficient to access the Single Number and Range Number Tables of the FLR service. No constraints on deployment of IMSIs into HLR and other nodes which host IMSI information.
   1.2 It cannot be assumed that the MGT contains always the complete MSIN: FLR is possible with constraints on the distribution of IMSIs into the HLRs.
2 The FLR service applies to a network with multiple MNCs:
   2.1 Flexibility of routing is required only within one MNC:
      2.1.1 The MGT contains always the complete MSIN: in this case the MSIN is sufficient to access the Single Number and Range Number Tables of the FLR service.
      2.1.2 It cannot be assumed that the MGT contains always the complete MSIN: FLR is possible with constraints on the distribution of IMSIs into the HLRs.
   2.2 Flexibility of routing is required to cover all MNCs of the operator: in this case the MNC plus the MSIN is required to access the Single Number and Range Number Tables of the FLR service.
      2.2.1 The MGT contains always the complete MSIN: in this case the NC plus the MSIN is required to access the Single Number and Range Number Tables of the FLR service.
      2.2.2 It cannot be assumed that the MGT contains always the complete MSIN: FLR is possible with constraints on the distribution of IMSIs into the HLRs.

If the MSIN is sufficient to access the Single Number and Range Number Tables, then 10 digits are required for the MSIN number tree. If the NC is required in addition to the MSIN, then up to 14 digits are required for the respective NC+MSIN number tree.

The MGT input string is very simple. The concrete structure of the MGT input digit string of the mobile network FLR service is as follows:
Structure Option 1: [CC] [NC] MSIN
Structure Option 2: [CC] NC MSIN
where
- All items listed in [] are optional, all other parts are mandatory.
- [CC] = Country Code.
- [NC] or NC = Network Code.
- MSIN = Mobile Subscriber Identification Number

The MSIN is the mandatory part. Therefore, it is queried in the MSIN based Single Number and/or Range Number tables. In some networks, it is possible that the NC has to be used together with the MSIN to query the Single Number and/or Range Number tables. This option has to be reflected in the configuration data.

For the optional number part the conditions must hold:
- For each optional number part, the maximum length is 15 digits. It is allowed, however, that the instances of an optional part differ in their length, as long as they do not surpass the defined maximum length.
- The numbers within each optional part must distinguish by leading digits. If the numbers of an optional number part all have the same length, then this condition is always fulfilled.
- A sequence of optional parts possibly followed by a mandatory part must as a whole distinguish by leading digits. This requirement is absolutely necessary, as optional part may not always be present, and their presence or absence must be unambiguously distinguishable by the number sequence.

For the MGT, the mandatory parts are always the core parts in the corresponding general abstract structure. In the same way, the optional parts are always the auxiliary parts in the corresponding general abstract structure.

### 1.3 Access Methods to SAS Database Data

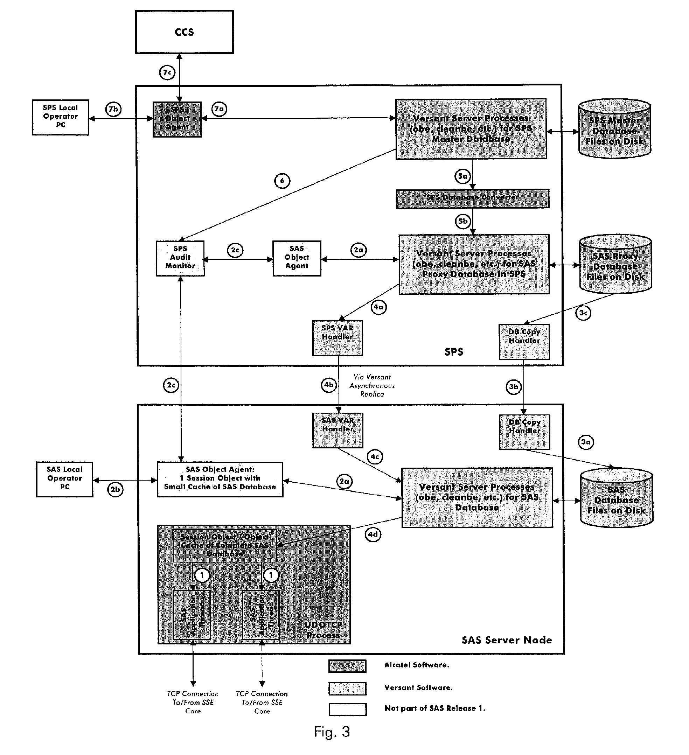

SAS database data is the data, which is maintained in the SAS databases in the SAS itself and the SAS Proxy Database in the SPS. Figure 3 depicts the reference configuration of the interfaces to the SAS databases. In total, there are six different interfaces to SAS data:
1. Fast read access for the SAS Application Services to the SAS database in the SAS itself. There is one SAS Application Thread per TCP connection to / from the SSE Core.
2. The interfaces of type 2 are all related to the SAS Object Agent. The SAS Object Agent has total access to the data in the SAS database in the SAS itself, using the following operations: Create, Read, Modify, and Delete. There are many variations of this interface both in the SAS and in the SPS. Each variation might have different syntax, but operations and the information content is always the same.
3. A database copy interface from the SAS Proxy database in the SPS to the SAS database in the SAS itself. The purpose of this interface is to transfer whole database files from the SPS to the SAS. The details of the database file structure are slightly different in the SAS and in the SPS due to different system platforms for each system. Therefore, the DB Copy Interface has to first convert the file format of the SPS to an external format and then into the format of the SAS.
4. The Versant Asynchronous Replica Mechanism replicates the modified data from the SAS Proxy Database in the SPS into the SAS Database in the SAS.
5. The interfaces of type 5 replicate and convert the modifications done in the SPS Master Database into the SAS Proxy Database in the SPS.
6. The SPS Audit Monitor has read access to the SPS Master Database in the SPS in order to perform its audits.
7. The SPS Object Agent has total access to the SPS Master Database, using the following operations: Create, Read, Write, and Delete. There are some variations of this interface in the SPS. Each variation might have different syntax, but operations and the information content is always the same.

Figure 3 shows the Reference Configuration of Interfaces to SAS Databases.

The specification direction is from bottom to top. I.e. the SAS Application Services specify the structure and contents of the SAS database and the special fast read access to the SAS database. The SAS Proxy Database in the SPS is an exact copy of the SAS Database. The SPS Master Database is derived from the SAS Database with additional information necessary for effective operation of the whole system. The SAS Object Agent provides a simple access to the objects in the SAS Database: Create, Read, Write, and Delete. This interface is offered to the SAS local operator PC and to the SPS Audit Monitor. The same interface is to be used for audits on the SAS Proxy Database in the SPS. Subsets of this interface have to be used to convert the information of the SPS Master Database into the format of the SAS Proxy Database in the SPS. The interfaces of types 5 through 7 are derived from the interfaces of type 2.

In principle it shall be possible that there are multiple SAS Proxy databases in the SPS, as there exists the possibility for some customers that his STPs with the SASs have different SAS data.

### 1.3.1 SAS Application Services: Fast Read Access

The fast read access methods and their use are similar for all SAS Application Services. Therefore, these principles are presented in the data requirement clauses, instead of being repeated for each SAS Application Service.

### 1.3.1.1 Introduction

SAS Application Services have only read access to the SAS Database. A SAS Application Service receives addresses from one or more protocol parameters. Currently, addresses from the Numbering Plans E.164, E.212, and E.214 can be processed. Each received address has to be analysed and a response action has to be generated accordingly. For the purpose of the SAS Application Services, an address has the following structure:
- A TCAP User E.164 Address includes Numbering Plan, Nature of Address Indicator and Digit String. In most cases, the TCAP User E.164 Address has exactly these three fields. The various TCAP user standards use sometimes synonyms for these three terms.
- A SCCP E.164 / E.212 / E.214 Address includes Global Title Indicator, Numbering Plan, Nature of Address Indicator and Global Title Address Information (i.e. Digit String). A SCCP 64 Address includes course of many more fields, however, for the current address analysis in the SAS Application Services only the above four fields are required. Future requirements may make it necessary, to include further fields of the SCCP Address.

The analysis of this address includes the following parts:
1. Analysis of the Numbering Plan (NP). This is done implicitly by the respective SAS Application Service, as it is assumed, that a given SAS Application Service manipulates only addresses of a single Numbering Plan. For the E.164 SAS Application Services the Numbering Plan is always E.164. For the E.212 SAS Application Services the Numbering Plan is always E.212. Etc.
2. Analysis of the Global Title Indicator (GTI). This is only required for SCCP addresses. The value of the Global Title Indicator can vary with the received SS7 messages. The current value of the GTI in combination with the current value of NoAI determines the current structure of the digit string.
3. Analysis of the Nature of Address Indicator (NoAI). The value of the Nature of Address Indicator can vary with the received SS7 messages. The current value of the GTI in combination with the current value of NoAI determines the current structure of the digit string.
4. Analysis of the digit string.

GTI, NoAI and the digit string of the received addresses are configurable items.

For each SAS Application Service that has to query the SAS Single Number or Range Number Tables, the digits that are used to search the tables are a subpart of the received digit string. In standard scenarios, these digits are only the National Significant portion of the complete received digit string.

In general, the national significant portion of an E.164 digit string includes two parts, here called Nat1 and Nat2. An example for Nat1 may be the National Destination Code (NDC), an example for Nat2 may be the Subscriber Number (SN). Secondly, in some cases, the national significant portion of an E.164 number includes only one integral part, here called Nat. Thirdly, it may be possible, that a SAS Application Service does not need to separate Nat1 and Nat2 in the received input digit string. In this case, the national significant portion of the received E.164 input digit string is also called Nat and includes the concatenation of Nat1 and Nat2.

The complete input digit string may contain many non-National components, such as an E.164 Country Code, an Inter Network Routing Number, an Internal Network Prefix, an Internal Network Infix, etc. It is therefore necessary to define how the received sequence of digits is analysed in order to derive the digit sequence, which is relevant for the query into the E.164 Single Number table or Range Number table. The digit analysis follows a progression of analysis steps on the received complete digit string, starting from the most significant digit to the least significant digit.

In more advanced scenarios the Single Number and Range Number Tables have to be queried with a number including more parts than only the national significant portion. E.g. number portability for two small countries realised by a single STP. In this case, the Country Code has to be used in addition to the national significant portion to query the Single Number and Range Number Tables. This leads to the more general definition of the Input Digit String of 0.

It is assumed that the SAS Application Service performs the necessary digit analysis of the received E.164 number. For the digit analysis to find the core part of the received E.164 number, the digit analysis has to access structural information about the received E.164 number. In order to keep the system flexible, this structural information is kept in a database:
- The structure of the Input Digit String is defined in the Input Digit String Configuration Table, Table 9.
- The Auxiliary Number Table contains the specific number parts, which have to be analysed in the Input Digit String.
- After the analysis of the Input Digit String using above two tables, the core parts are concatenated to be used in the query against the Single Number and Range Number tables.
- After those two analysis stages, in a third stage, the response is generated.

This principle applies to the E.164 and MSIN based numbers.

A given SAS Application Service can have one or more input digit strings. This is illustrated taking the SAS Application Service MNP INAP with Optional Voice Mail Inter-working. This service receives input digit strings from up to two protocol parameters. The following three structure options are identified:
Called Party Address Structure Option 1: [INRN] [EC] [CC] NDC [VMSC-INI] SN.
Called Party Address Structure Option 2: [INRN] [EC] [CC] GAC.
Calling Party Address Structure Option 1: [EC] [CC] NDC SN.

The concrete structure of an input digit string depends on the currently received NoAI value. For a given customer network this could imply the following on the above three structure options:
Called Party Address Structure Option 1:
   NoAI = International: CC NDC [VMSC-INI] SN.
   NoAI = National: NDC [VMSC-INI] SN.
   NoAI = Unknown: EC [CC] NDC [VMSC-INI] SN.
   NoAI = Subscriber: INRN EC1 NDC [VMSC-INI] SN.
Called Party Address Structure Option 2:
   NoAI = International: CC GAC.
   NoAI = National: GAC.
   NoAI = Unknown: EC [CC] GAC.
   NoAI = Subscriber: not allowed.
Calling Party Address Structure Option 1:
   NoAI = International: CC NDC SN.
   NoAI = National: NDC SN.
   NoAI = Unknown: EC [CC] NDC SN.
   NoAI = Subscriber: not allowed.

The configuration table for the allowed values of NoAI for the above two protocol elements is presented in Table 1 below. This explicit list of allowed values of NoAI excludes the need for a Default Input Digit String Definition for the case where the received NoAI value is different from the NoAI values for which Input Digit String Definitions have been specified.

**Table 1:**

| Allowed Values of NoAI Configuration Table for the Example. **Allowed Values of NoAI Configuration Table** | | | |
|---|---|---|---|
| **SAS Application Service Id** | **Protocol Element Id** | **Global Title Indicator** | **Allowed Values of NoAI** |
| MNP-INAP-O-VM-IW | INAP IDP CdPA | Not Used | {International, National, Unknown, Subscriber} |
| MNP-INAP-O-VM-IW | INAP IDP CgPA | Not Used | {International, National, Unknown} |

As a next step input digit strings need to be defined using the Input Digit String Configuration Table. Each entry allocates storage for the respective element. A straightforward definition of the Input Digit String Configuration Table is as follows:

**Table 2:**

| Straightforward Definition of the Input Digit String Configuration Table for the Example. **Input Digit String Configuration Table** | | | | | | |
|---|---|---|---|---|---|---|
| **SAS Application Service Id** | **Input Digit String Id** | **Auxiliary Number Name** | **Global Title Indicator** | **Nature of Address Indicator** | **Auxiliary Number Presence** | **Auxiliary Number Position** |
| MNP-INAP-O-VM-IW | 1 | CC | Not Used | International | Always - Auxiliary | Head-0 |
| MNP-INAP-O-VM-IW | 1 | NDC | Not Used | International | Always - Core | Head-1 |
| MNP-INAP-O-VM-IW | 1 | VMSC-INI | Not Used | International | Sometimes-Auxiliary | Head-2 |
| MNP-INAP-O-VM-IW | 1 | SN | Not Used | International | Always - Core | BigCore |
| MNP-INAP-O-VM-IW | 2 | NDC | Not Used | National | Always - Core | Head-0 |
| MNP-INAP-O-VM-IW | 2 | VMSC-INI | Not Used | National | Sometimes - Auxiliary | Head-1 |
| MNP-INAP-O-VM-IW | 2 | SN | Not Used | National | Always - Core | BigCore |
| MNP-INAP-O-VM-IW | 3 | EC | Not Used | Unknown | Always - Auxiliary | Head-0 |
| MNP-INAP-O-VM-IW | 3 | CC | Not Used | Unknown | Conditional-Auxiliary | Head-1 |
| MNP-INAP-O-VM-IW | 3 | NDC | Not Used | Unknown | Always - Core | Head-2 |
| MNP-INAP-O-VM-IW | 3 | VMSC-INI | Not Used | Unknown | Sometimes - Auxiliary | Head-3 |
| MNP-INAP-O-VM-IW | 3 | SN | Not Used | Unknown | Always - Core | BigCore |
| MNP-INAP-O-VM-IW | 4 | INRN | Not Used | Subscriber | Always - Auxiliary | Head-0 |
| MNP-INAP-O-VM-IW | 4 | EC1 | Not Used | Subscriber | Always - Auxiliary | Head-1 |
| MNP-INAP-O-VM-IW | 4 | NDC | Not Used | Subscriber | Always - Core | Head-2 |
| MNP-INAP-O-VM-IW | 4 | VMSC-INI | Not Used | Subscriber | Sometimes - Auxiliary | Head-3 |
| MNP-INAP-O-VM-IW | 4 | SN | Not Used | Subscriber | Always - Core | BigCore |
| MNP-INAP-O-VM-IW | 5 | CC | Not Used | International | Always - Auxiliary | Head-0 |
| MNP-INAP-O-VM-IW | 5 | GAC | Not Used | International | Always - Auxiliary | Head-1 |
| MNP-INAP-O-VM-IW | 6 | GAC | Not Used | National | Always - Auxiliary | Head-0 |
| MNP-INAP-O-VM-IW | 7 | EC | Not Used | Unknown | Always - Auxiliary | Head-0 |
| MNP-INAP-O-VM-IW | 7 | CC | Not Used | Unknown | Conditional -Auxiliary | Head-1 |
| MNP-INAP-O-VM-IW | 7 | GAC | Not Used | Unknown | Always - Auxiliary | Head-2 |
| MNP-INAP-O-VM-IW | 8 | Not Allowed | Not Used | Subscriber | Always - Auxiliary | Head-0 |
| MNP-INAP-O-VM-IW | 9 | CC | Not Used | International | Always - Auxiliary | Head-0 |
| MNP-INAP-O-VM-IW | 9 | NDC | Not Used | International | Always - Core | Head-1 |
| MNP-INAP-O-VM-IW | 9 | SN | Not Used | International | Always - Core | BigCore |
| MNP-INAP-O-VM-IW | 10 | NDC | Not Used | National | Always - Core | Head-0 |
| MNP-INAP-O-VM-IW | 10 | SN | Not Used | National | Always - Core | BigCore |
| MNP-INAP-O-VM-IW | 11 | EC | Not Used | Unknown | Always-Auxiliary | Head-0 |
| MNP-INAP-O-VM-IW | 11 | CC | Not Used | Unknown | Conditional -Auxiliary | Head-1 |
| MNP-INAP-O-VM-IW | 11 | NDC | Not Used | Unknown | Always - Core | Head-2 |
| MNP-INAP-O-VM-IW | 11 | SN | Not Used | Unknown | Always - Core | BigCore |
| MNP-INAP-O-VM-IW | 12 | Not Allowed | Not Used | Subscriber | Always - Auxiliary | Head-0 |

**Table 3:**

| Input Digit String To Protocol Element Mapping Table for Table 2. **Input Digit String To Protocol Element Mapping Table** | | | |
|---|---|---|---|
| **SAS Application Service Id** | **Input Digit String Id** | **Protocol Element Id** | **Input Digit String Option** |
| MNP-INAP-O-VM-IW | 1 | INAP IDP CdPA | 2 |
| MNP-INAP-O-VM-IW | 2 | INAP IDP CdPA | 2 |
| MNP-INAP-O-VM-IW | 3 | INAP IDP CdPA | 2 |
| MNP-INAP-O-VM-IW | 4 | INAP IDP CdPA | 2 |
| MNP-INAP-O-VM-IW | 5 | INAP IDP CdPA | 1 |
| MNP-INAP-O-VM-IW | 6 | INAP IDP CdPA | 1 |
| MNP-INAP-O-VM-IW | 7 | INAP IDP CdPA | 1 |
| MNP-INAP-O-VM-IW | 8 | INAP IDP CdPA | 1 |
| MNP-INAP-O-VM-IW | 9 | INAP IDP CgPA | 1 |
| MNP-INAP-O-VM-IW | 10 | INAP IDP CgPA | 1 |
| MNP-INAP-O-VM-IW | 11 | INAP IDP CgPA | 1 |
| MNP-INAP-O-VM-IW | 12 | INAP IDP CgPA | 1 |

The advantage of the definition of Table 2 is that each structure option above is uniquely represented. The disadvantage is that the service logic has to make a decision at which input digit string for INAP IDP CdPA with detected NoAI value it shall start to analyse, and if it turns out that the decision was wrong, move to the other input digit string. This sequence is defined by the Input Digit String Option. The option with the smallest number is analysed first. It is recommended to analyse that option first, which consumes the least processing power. A further sort criterion would be the frequency of occurrence of a particular Input Digit String. Of course, there is a trade-off between all sort criteria.

Therefore, Table 4 combines the Called Party Address Structure Options 1 and 2. Such a combination is not always possible. Here it is possible, as the second option consists only of Head parts and the sequence of these Head parts is the same as for the first option, and the last Head part of the second option is a GAC. A GAC implies that the analysis of this Input Digit String has to be stopped, the application service logic to be informed and a decision for further processing is to be taken. A general rule, when such a combination is possible, has to be evaluated. A further advantage of this approach is that less storage space has to be allocated for the inbound digit analysis. Caveat: whether this combination of Input Digit String can really be used, is for further study. If such a combination is not done with care, then erroneous Input Digit Strings might be analysed as correct. Therefore, in the moment such a combination is not recommended.

**Table 4:**

| Compressed Definition of the Input Digit String Configuration Table for the Example. **Input Digit String Configuration Table** | | | | | | |
|---|---|---|---|---|---|---|
| **SAS Application Service Id** | **Input Digit String Id** | **Auxiliary Number Name** | **Global Title Indicator** | **Nature of Address Indicator** | **Auxiliary Number Presence** | **Auxiliary Number Position** |
| MNP-INAP-O-VM-IW | 1 | CC | Not Used | International | Always-Auxiliary | Head-0 |
| MNP-INAP-O-VM-IW | 1 | GAC | Not Used | International | Sometimes-Auxiliary | Head-1 |
| MNP-INAP-O-VM-IW | 1 | NDC | Not Used | International | Sometimes - Core | Head-2 |
| MNP-INAP-O-VM-IW | 1 | VMSC-INI | Not Used | International | Sometimes - Auxiliary | Head-3 |
| MNP-INAP-O-VM-IW | 1 | SN | Not Used | International | Sometimes - Core | BigCore |
| MNP-INAP-O-VM-IW | 2 | GAC | Not Used | National | Sometimes - Auxiliary | Head-0 |
| MNP-INAP-O-VM-IW | 2 | NDC | Not Used | National | Sometimes - Core | Head-1 |
| MNP-INAP-O-VM-IW | 2 | VMSC-INI | Not Used | National | Sometimes - Auxiliary | Head-2 |
| MNP-INAP-O-VM-IW | 2 | SN | Not Used | National | Sometimes - Core | BigCore |
| MNP-INAP-O-VM-IW | 3 | EC | Not Used | Unknown | Always - Auxiliary | Head-0 |
| MNP-INAP-O-VM-IW | 3 | CC | Not Used | Unknown | Conditional-Auxiliary | Head-1 |
| MNP-INAP-O-VM-IW | 3 | GAC | Not Used | Unknown | Sometimes-Auxiliary | Head-2 |
| MNP-INAP-O-VM-IW | 3 | NDC | Not Used | Unknown | Sometimes-Core | Head-3 |
| MNP-INAP-O-VM-IW | 3 | VMSC-INI | Not Used | Unknown | Sometimes - Auxiliary | Head-4 |
| MNP-INAP-O-VM-IW | 3 | SN | Not Used | Unknown | Sometimes - Core | BigCore |
| MNP-INAP-O-VM-IW | 4 | INRN | Not Used | Subscriber | Always - Auxiliary | Head-0 |
| MNP-INAP-O-VM-IW | 4 | EC1 | Not Used | Subscriber | Always - Auxiliary | Head-1 |
| MNP-INAP-O-VM-IW | 4 | NDC | Not Used | Subscriber | Always - Core | Head-2 |
| MNP-INAP-O-VM-IW | 4 | VMSC-INI | Not Used | Subscriber | Sometimes - Auxiliary | Head-3 |
| MNP-INAP-O-VM-IW | 4 | SN | Not Used | Subscriber | Always - Core | BigCore |
| MNP-INAP-O-VM-IW | 5 | CC | Not Used | International | Always-Auxiliary | Head-0 |
| MNP-INAP-O-VM-IW | 5 | NDC | Not Used | International | Always - Core | Head-1 |
| MNP-INAP-O-VM-IW | 5 | SN | Not Used | International | Always - Core | BigCore |
| MNP-INAP-O-VM-IW | 6 | NDC | Not Used | National | Always - Core | Head-0 |
| MNP-INAP-O-VM-IW | 6 | SN | Not Used | National | Always - Core | BigCore |
| MNP-INAP-O-VM-IW | 7 | EC | Not Used | Unknown | Always-Auxiliary | Head-0 |
| MNP-INAP-O-VM-IW | 7 | CC | Not Used | Unknown | Conditional - Auxiliary | Head- 1 |
| MNP-INAP-O-VM-IW | 7 | NDC | Not Used | Unknown | Always - Core | Head-2 |
| MNP-INAP-O-VM-IW | 7 | SN | Not Used | Unknown | Always - Core | BigCore |
| MNP-INAP-O-VM-IW | 8 | Not Allowed | Not Used | Subscriber | Always-Auxiliary | Head-0 |

**Table 5:**

| Input Digit String To Protocol Element Mapping Table for Table 4. **Input Digit String To Protocol Element Mapping Table** | | | |
|---|---|---|---|
| **SAS Application Service Id** | **Input Digit String Id** | **Protocol Element Id** | **Input Digit String Option** |
| MNP-INAP-O-VM-IW | 1 | INAP IDP CdPA | 1 |
| MNP-INAP-O-VM-IW | 2 | INAP IDP CdPA | 1 |
| MNP-INAP-O-VM-IW | 3 | INAP IDP CdPA | 1 |
| MNP-INAP-O-VM-IW | 4 | INAP IDP CdPA | 1 |
| MNP-INAP-O-VM-IW | 5 | INAP IDP CgPA | 1 |
| MNP-INAP-O-VM-IW | 6 | INAP IDP CgPA | 1 |
| MNP-INAP-O-VM-IW | 7 | INAP IDP CgPA | 1 |
| MNP-INAP-O-VM-IW | 8 | INAP IDP CgPA | 1 |

The service logic of the respective service knows, which input digit string is to be used at which time. For instance, MNP-tNAP-O-VM-IW analyses first the Called Party input digit string. If there is a GAC in this string, then the Calling Party input digit string has to be analysed as well.

According to the same principle, a given SAS Application Service can have one or more output digit strings. Each output digit string is mapped to the input digit string by means of the Digit String Ids and the names of the auxiliary parts. If an auxiliary part is not overwritten by a Service Control Data value, this auxiliary part is copied from the input digit string to the respective position in the output digit string. It is even possible that an input digit string may be completely overwritten by a Service Control Data value. The output digit string to be used by the application service is configured in the outbound processing configuration table. The SAS Application Service knows how output digit strings are mapped to the correct parameters of the respective protocol by means of the Output Digit String To Protocol Element Mapping Table.

The three stages are described in detail as follows:
- Stage 1 - Inbound Message Analysis: This stage starts with some service specific inbound protocol checks. Then the auxiliary number parts are analysed. If found and correct, then remove auxiliary number part from received E.164 or MSIN Based number and store it internally. This analysis is done step by step for each possible auxiliary number part. When the analysis of the auxiliary number parts terminates successfully, then the second stage starts.
   Each auxiliary number is to be stored in a record containing its name, its position, its value, and its presence. Inbound Processing is configured based on the specification of the received digit string and other application service specific configuration items.
- Stage 2 - Service Decision: Analyse the core part of the received number in the Single Number and Range Number tables. Additional digits might be requested. The Extended Match Indicator is to be used if required. Service Decision includes also Loop Detection. The Service Decision is executed dependent on configuration data items and the Transition Indicator, the Default/Exception Indicator, and the Single Number Flag of the Single Number and Range Number tables.
- Stage 3 - Outbound Message Synthesis: Depending on the result of this database query and the inbound processing, the response is generated. Outbound processing is configured based on the specification of the digit string to be sent off, the Service Control Data Record, the Number Type and the Portability Status, and other configuration data items.

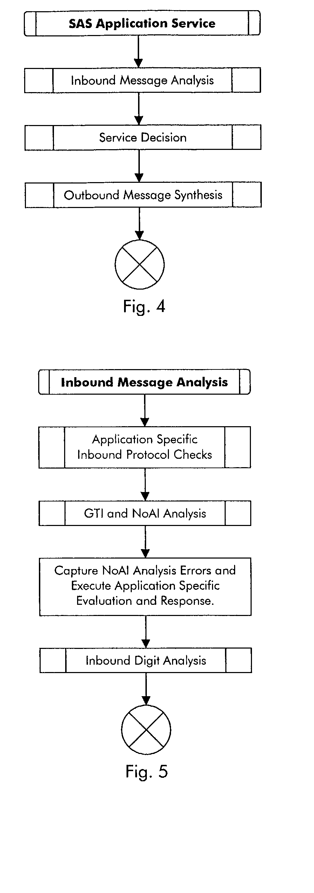

Figure 4 shows the Generic Structure of a SAS Application Service.

### 1.3.1.2 Inbound Message Analysis

Figure 5 depicts an SDL diagram of the service logic for the Inbound Message Analysis. Inbound Message Analysis includes three sub-tasks: Application Specific Inbound Protocol Checks, NoAI Analysis, and Inbound Digit Analysis. The Application Specific Inbound Protocol Checks are completely specific to a SAS Application Service. Therefore, they are not further discussed in these generic chapters. NoAI Analysis and Inbound Digit Analysis are very generic for all SAS Application Services. Therefore, they are discussed in two separate sub-chapters.

After NoAI Analysis, any errors that have occurred during NoAI Analysis are captured, and then an application specific evaluation and response is executed.

Please note that the general logic of the Inbound Message Analysis is presented here. A given SAS Application Service may use only a subset of it, or even add other features.

Figure 5 shows the Inbound Address Analysis and Inbound Digit Analysis.

Inbound Digit Analysis makes intensive use of the Auxiliary Number Table. Table 6 presents an Auxiliary Number Table for the example above.

**Table 6:**

| Auxiliary Number Table for the Example. **Auxiliary Number Table** | | | |
|---|---|---|---|
| **Auxiliary Number Name** | **Auxiliary Number Length** | **Auxiliary Number Value** | **Auxiliary Number Offset** |
| EC | 1 | 0 | 0 |
| EC | 2 | 00 | 0 |
| EC1 | 1 | 0 | 0 |
| EC2 | 2 | 00 | 0 |
| CC | 3 | 353 | 0 |
| INRN | 5 | 17685 | 0 |
| INRN | 5 | 17686 | 0 |
| INRN | 5 | 17687 | 0 |
| OwnINRN | 5 | 17685 | 0 |
| NDC | 2 | 85 | 0 |
| NDC | 2 | 86 | 0 |
| NDC | 2 | 87 | 0 |
| VMSC-INI | 1 | 5 | 0 |

### 1.3.1.2.1 Analysis of the of Global Title Indicator and Nature of Address Indicator

The combined Analysis of the Global Title Indicator (GTI) and the Nature of Address Indicator (NoAI) first checks whether this SS7 protocol parameter contains a GTI. Whether or not a GTI can be expected in the received address is specified in the Allowed Values of NoAI Configuration Table. If a GTI is expected in the received address, then it is extracted from the address of the selected protocol element in its received format. Then the NoAI value is extracted from the address of the selected protocol element.

Based on the NoAI value - and if present, also the GTI value - it selects the correct configured Input Digit String for Inbound Digit Analysis. The NoAI value - and if present, also the GTI value - is returned in the format of the respective protocol.

The intent of the GTI and NoAI Analysis is to examine the type of address that was received in the SS7 message. This information may be contained in the SCCP parameter Nature of Address Indicator, or in a SS7 parameter of another name. For the purpose of chapter 0 of this specification, the term NoAI applies to any parameter that communicates the information necessary to interpret the composition of the address digits. The GTI parameter can only occur in a SCCP address.

The GTI and NoAI Analysis provides insight into the basic structure of the received digit string. In particular, the NoAI indicates, whether the received digit string contains an E.164 Country Code or not.

NoAI information can be present on various levels: SCCP, INAP, MAP, CAP, etc. The encoding of NoAI information at each level can be different. The particular SAS Application Service has to know, which kind of NoAI information is to be processed and how the encoding is.

### International Numbers:

The recognition of the Country Code contained within the input digit sequence is necessary only when the associated NoAI for the digit sequence indicates that it is an International number, also called a number in International Form in this specification.

A sequence of digits shall be recognised as being in International Form if the NoAl parameter is set to International Number, e.g. 04h for the NoAl parameter of the SCCP GTAI (ITU-T Q.713), or an equivalent value for an equivalent SS7 parameter.

If the NoAl value "International" is detected, then the Inbound Digit Analysis has to select the Input Digit String belonging to the NoAl value "International".

### National Numbers:

With national numbers there is no Country Code that is contained within the received digit string. The NoAI (or its equivalent) may explicitly indicate a National digit string. A National number is also called a number in National Form in this specification.

A sequence of digits shall be recognised as being in National Form if the NoAI parameter is set to National Significant Number, e.g. 03h for the NoAI parameter of the SCCP GTAI (ITU-T Q.713), or an equivalent value for an equivalent SS7 parameter.

### Unsupported Numbers:

If the NoAI value (or its equivalent) is not one of the supported values then it is the responsibility of the respective SAS Application Service to define the action taken upon receipt of these generally unsupported numbers. I.e. it is a matter of the SAS Application Service what to do with the Error "NoAI of received Address from Protocol Element not allowed".

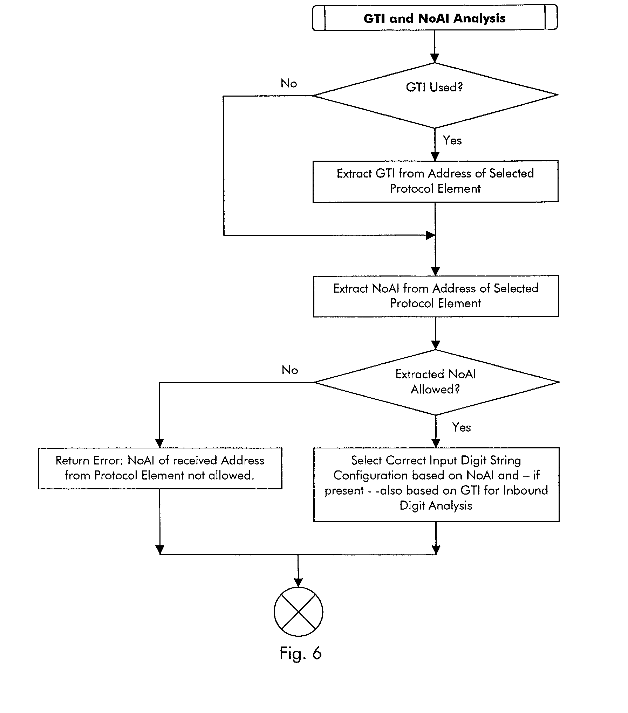

Figure 6 shows an Analysis of the Global Title Indicator and the Nature of Address Indicator.

Whether NoAI Analysis should additionally indicate the detected NoAI value in a protocol independent format is for further study. This would imply a configuration table containing the respective mappings.

### 1.3.1.2.2 Inbound Digit Analysis

Figure depicts the Inbound Digit Analysis. Inbound Digit Analysis includes the three parts Head Analysis, Tail Analysis, and BigCore Analysis. BigCore Analysis has to be done after the Tail analysis, as for the BigCore there is no entry in the Auxiliary Number Table. Therefore, the Big Core is the only remaining part of the Input Digit String after the Head Analysis and the Tail Analysis is finished. All three parts are treated in dedicated sub-chapters.

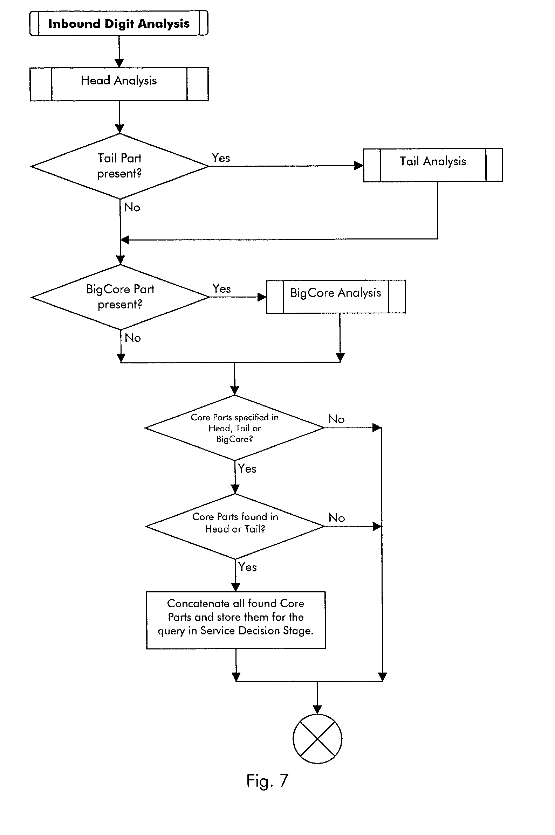

Figure 7 shows the Inbound Digit Analysis.

No errors and exceptions need to be generated in case no Tail part or no BigCore part is present in the Input Digit String definition, as all these options are allowed options. A Head part must be present in the Input Digit String definition. It has to be assured during configuration time, that this condition is met.

After the three analysis steps are finished, it has to be checked, whether Core Parts have been specified in the Input Digits String Configuration Table and found during these analysis steps. Core Parts are recognised by their Auxiliary Number Presence parameter. If their Auxiliary Number Presence parameter value contains "Core" in its mnemonic, then the respective number part is a Core Part. No errors or exceptions are generated if one or both of these conditions is answered with "No" because of the following reasons:
- If the Input Digits String Configuration Table does not specify Core Parts in a given Input Digit String, then there must an Auxiliary Number part be specified in the Input Digit String, for which the analysis generates an Exception if this Auxiliary Number is actually present and an Error when this Auxiliary Number is actually not present. This error or exception has to be captured by the respective SAS Application Service. The SAS Application Service has to know what to do in these cases. The correct specification of Input Digit String for SAS Application Services has to be assured at system configuration time.
- If a Core Part specified in the Input Digit String is not actually present, then the respective analysis procedure will generate an error or an exception. This error or exception has to be captured by the respective SAS Application Service. The SAS Application Service has to know what to do in these cases.

### 1.3.1.2.2.1 Head Analysis

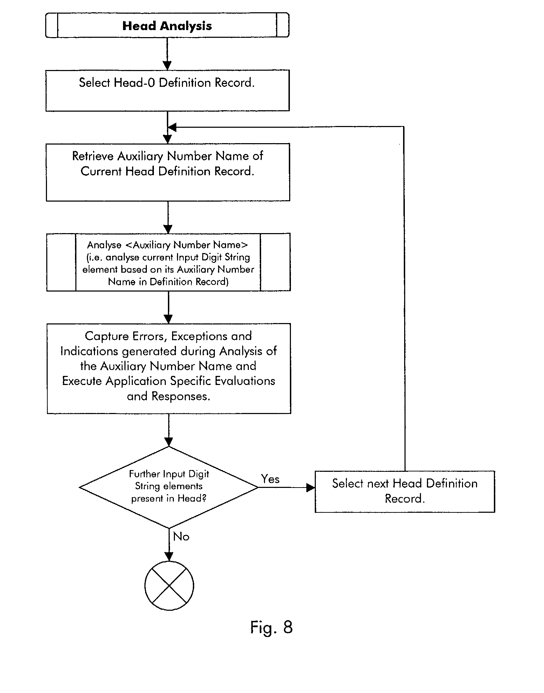

Figure 8 shows the Head Analysis- Overview.

The Head analysis starts at the first Head element. This element has to be configured in any case. Then the Auxiliary Number Name of the current Head definition record is retrieved. This is exactly the Auxiliary Number Name specified for this entry in the Input Digit String Configuration Table. Based on this Auxiliary Number Name, the correct procedure is called to analyse the respective number part in the current input digit string. Examples of the specific procedures to be called are "Analyse EC", "Analyse CC", "Analyse INRN", "Analyse NDC", etc.

After the analysis of the Auxiliary Number, any errors, exceptions or indications that might have been generated during this analysis are captured, and then an application specific evaluation and response is executed.

Finally, it is checked whether there are further Input Digit String elements present in Head. If Yes, the next one is analyzed. If No, this procedure terminates.

### 1.3.1.2.2.2 Tail Analysis

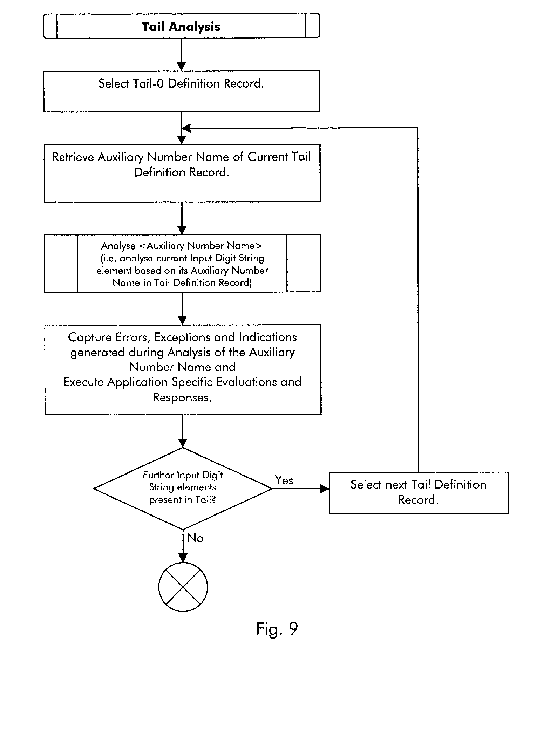

Figure 9 shows the Tail Analysis- Overview.

The Tail analysis starts at the first Head element. This presence of this element has already been checked by the procedure Inbound Digit Analysis in Figure , otherwise Tail Analysis is not called. Then the Auxiliary Number Name of the current Tail definition record is retrieved. This is exactly the Auxiliary Number Name specified for this entry in the Input Digit String Configuration Table. Based on this Auxiliary Number Name, the correct procedure is called to analyse the respective number part in the current input digit string. Examples of the specific procedures to be called are "Analyse EC", "Analyse CC", "Analyse INRN", "Analyse NDC", etc.

After the analysis of the Auxiliary Number, any errors, exceptions or indications that might have been generated during this analysis are captured, and then an application specific evaluation and response is executed.

Finally, it is checked whether there are further Input Digit String elements present in Tail. If Yes, the next one is analysed. If No, this procedure terminates.

### 1.3.1.2.2.3 BigCore Analysis

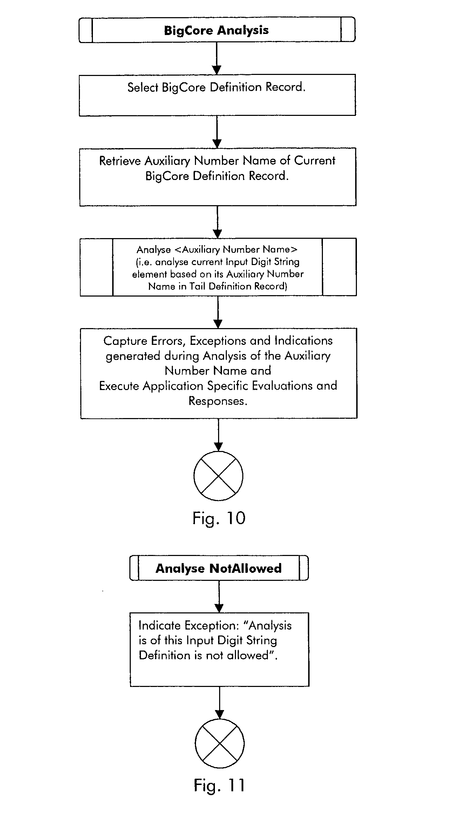

Figure 10 shows the BigCore Analysis- Overview.

The BigCore analysis starts at the one and only BigCore element. This presence of this element has already been checked by the procedure Inbound Digit Analysis in Figure , otherwise BigCore Analysis is not called. Then the Auxiliary Number Name of the current BigCore definition record is retrieved. This is exactly the Auxiliary Number Name specified for this entry in the Input Digit String Configuration Table. Based on this Auxiliary Number Name, the correct procedure is called to analyse the respective number part in the current input digit string. Examples of the specific procedures to be called are "Analyse Nat", "Analyse Nat2", "Analyse BigCore", "Analyse NDC", etc.

After the analysis of the Auxiliary Number, any errors, exceptions or indications that might have been generated during this analysis are captured, and then an application specific evaluation and response is executed.

As only at most on BigCore element can be present in an Input Digit String, the BigCore Analysis terminates after analysis of the Auxiliary Number Name.

### 1.3.1.2.2.4 Specific Analysis Procedures for Currently Valid Auxiliary Number Names

A given Head, Tail or BigCore is analyzed on the basis of its Auxiliary Number Name. The name of the Auxiliary Number somehow denotes its type. Currently there are 16 possible Auxiliary Number Names to be analyzed:
- NotAllowed.
- SI (Service Indicator).
- EC (Escape Code)
- EC1 (Escape Code 1 to access the national network).
- EC2 (Escape Code 2 to access the international network).
- CC (Country Code).
- MCC (Mobile Country Code).
- INRN (Inter-Network Routing Number).
- VMSC-INP (Voice Mail Service Centre - Internal Network Prefix).
- GAC (General Access Code).
- NDC (National Destination Code).
- MNC (Mobile Network Code).
- NC (Network Code).
- Nat1 (1^{st} national significant portion ofthe number).
- VMSC-INI (Voice Mail Service Centre - Internal Network Infix).
- SN (Subscriber Number).
- MSIN (Mobile Subscriber Identification Number).
- Nat2 (2^{nd} national significant portion of the number).
- Nat (complete national significant portion of the number).
- BigCore (the BigCore part of the number).

Table 7 presents the possible occurrences of currently allowed Auxiliary Number Names in the three types of Inbound Digit Analysis.

**Table 7:**

| Occurrences of Auxiliary Number Names in the three Types of Inbound Digit Analysis. | | | |
|---|---|---|---|
| **Auxiliary Number Name** | **Possible Occurrence in Type of Inbound Digit Analysis** | | |
| | **Head Analysis** | **Tail Analysis** | **BigCore Analysis** |
| NotAllowed | X | | |
| SI | X | | |
| EC | X | | |
| EC1 | X | | |
| EC2 | X | | |
| CC | X | | |
| MCC | X | | |
| INRN | X | | |
| VMSC-INP | X | | |
| GAC | X | | |
| NDC | X | | |
| MNC | X | | |
| NC | X | | |
| Nat1 | X | | |
| VMSC-INI | X | | |
| SN | | | X |
| MSIN | | | X |
| Nat2 | | | X |
| Nat | | | X |
| BigCore | | | X |

In the following sub-chapters, the analysis algorithms for all these Auxiliary Number Names are specified. Further types of Auxiliary Number Names could be added.

### 1.3.1.2.2.4.1 Analyse NotAllowed

Figure 11 shows Analyse NotAllowed.

When Inbound Digit Analysis is required to analyse an Input Digit String definition which contains only one entry where the Auxiliary Number Name is "NotAllowed", the Auxiliary Number Table will not be searched. "NotAllowed" indicates that the Inbound Digit Analysis for the received Input Digit String reached an Input Digit String definition for which it is not allowed to analyse any input digit string. It is up to the SAS Application Service, what has to be done with this error indication. There are two basic possibilities:
- Either select a further untested Input Digit String definition of the same protocol element and check whether the Input Digit String can be analysed with this Input Digit String definition, or
- Unsuccessfully finish the processing of the received SS7 message.

### 1.3.1.2.2.4.2 Analyse SI (IN Service Indicator)

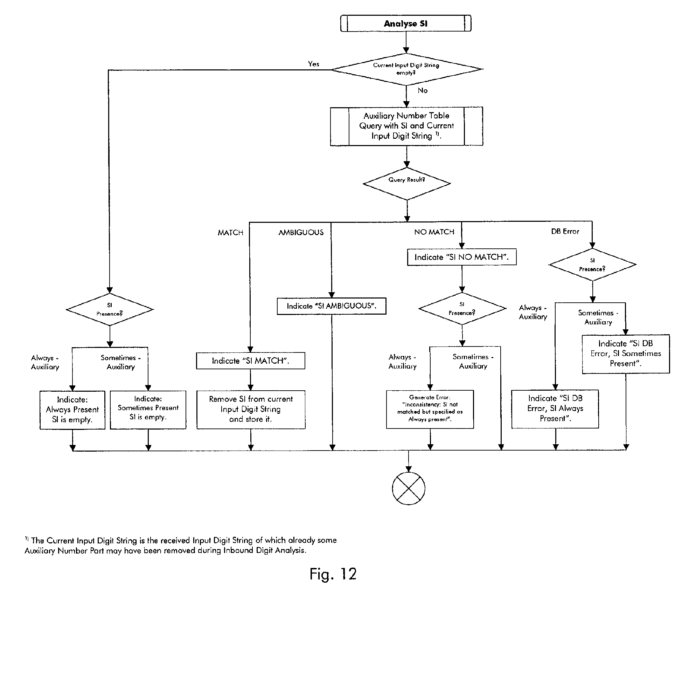

Figure 12 shows Analyse Service Indicator.

When Inbound Digit Analysis is required to search for the presence of a Service Indicator in the input digit string, the Auxiliary Number Table will be searched to determine if any Service Indicators have been defined. A special SAS Database Access Method is used for this purpose.

If an Auxiliary Number Table search matches to the input digit stream and the name of the Auxiliary Number is different from SI, then a Service Indicator shall not be detected by Digit Analysis.

If an Auxiliary Number Table search matches to the input digit stream and the name of the Auxiliary Number is SI, then a Service Indicator shall be detected by Inbound Digit Analysis.

If a Service Indicator is detected by Digit Analysis, then the Service Indicator shall be removed from the input digit string and stored in the SAS Application Service.

If an Auxiliary Number Table search returns with MATCH, AMBIGUOUS, NO MATCH or Database Error, this result is indicated to the calling procedure.

For the presence of the SI, only two values are allowed: "Always - Auxiliary" and "Sometimes - Auxiliary". During the configuration of the system it has to be assured that only these two possible values of Auxiliary Number Presence in the Input Digit String Configuration Table can be chosen for SI.

It is a matter of the SAS Application Service what to do with the indications "SI MATCH", "SI AMBIGUOUS-, "SI NO MATCH", and possibly generated errors "Inconsistency: SI not matched but specified as always present", "SI DB Error, SI Always Present" and "SI DB Error, SI Sometimes Present". From the perspective of the procedure Analyse SI, the Database Error is treated in the same way as the database result NO MATCH.

### 1.3.1.2.2.4.3 Analyse Escape Code

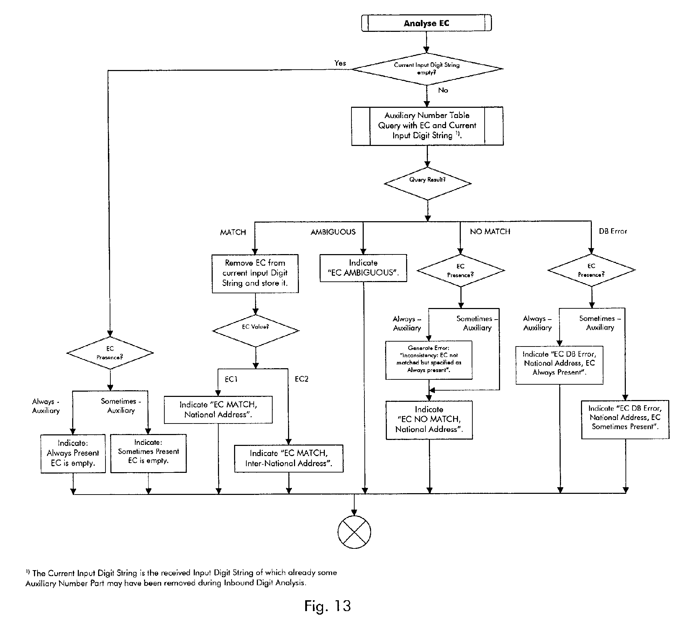

Figure 13 shows Analyse Escape Code.

Currently there are two known possibilities where it is required to search for the presence of an Escape Code:
1. In an Input Digit String Definition where the NoAI value is "unknown". This is the standardised case. This implies that an Escape Code must never be searched in Input Digit String Definition where the NoAI value is either "national" or "international".
2. In an Input Digit String Definition where the NoAI value is other than "unknown", "national", or "international". This is the customer specific case. Known customer specific values are currently: "subscriber".

When Inbound Digit Analysis is required to search for the presence of an Escape Code in the input digit string, the Auxiliary Number Table will be searched to determine if any Escape Codes have been defined. A special SAS Database Access Method is used for this purpose.

If an Auxiliary Number Table search matches to the input digit stream and the name of the Auxiliary Number is different from EC, then an Escape Code shall not be detected by Digit Analysis.

If an Auxiliary Number Table search matches to the input digit stream and the name of the Auxiliary Number is EC, then an Escape Code shall be detected by Inbound Digit Analysis.

If an Escape Code is detected by Digit Analysis, then the Escape Code shall be removed from the input digit string and stored in the SAS Application Service.

In general, there are always only two possible Escape Codes: EC1 for the escape into the national network and EC2 for the escape into the international network. Often - e.g. in the case of EC1 =0 and EC2=00 - EC1 is a leading sub-string of EC2. This fact is considered in the search direction in the Auxiliary Number table, which is always from the greatest to the smallest entry.

If (two) values for EC have been provisioned in the Auxiliary Number Table, then also a dedicated single value has to be provisioned for both EC1 and EC2. After EC has been removed from the current Input Digit String, it is checked whether EC equals to EC1 or EC2. The result of this check is indicated. The Analysis of Country Code needs this result for proper analysis.

If an Auxiliary Number Table search returns with MATCH, AMBIGUOUS, NO MATCH, or Database Error this result is indicated to the calling procedure.

A sequence of digits shall be recognised as being in National Form if the NoAI parameter (or its equivalent) is set to Unknown or to another value (e.g. Subscriber) which implies an EC, and there is NO MATCH or Database Error in the Auxiliary Number Table with EC and the Current Input Digit String.

For the presence of the EC, only two values are allowed: "Always - Auxiliary" and "Sometimes - Auxiliary". During the configuration of the system it has to be assured that only these two possible values of Auxiliary Number Presence in the Input Digit String Configuration Table can be chosen for EC.

It is a matter of the SAS Application Service what to do with indications "EC MATCH, National Address", "EC MATCH, International Address", "EC AMBIGUOUS", "EC NO MATCH, National Address", and possibly generated errors "Inconsistency: EC not matched but specified as always present", "EC DB Error, National Address, EC Always Present" and "EC DB Error, National Address, EC Sometimes Present". From the perspective of the procedure Analyse EC, the Database Error is treated in the same way as the database result NO MATCH.

### 1.3.1.2.2.4.4 Analyse Escape Code 1 (Escape to National Network)

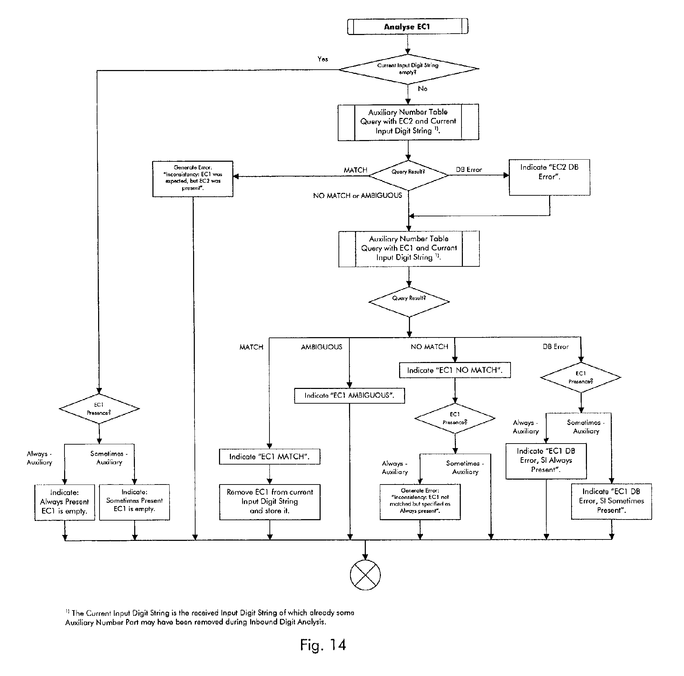

Figure 14 depicts the SDL diagram of Analyse Escape Code 1 (Escape to National Network).

Currently there is only one known possibility where it is required to search for the presence of an Escape Code 1 (Escape to National Network):
- In an Input Digit String Definition where the NoAI value is other than "unknown", "national", or "international". This is the customer specific case. Known customer specific values are currently: "subscriber". The NoAI value of "subscriber" implies in this case that always EC1 has to be in the Input Digit String.

When Inbound Digit Analysis is required to search for the presence of an Escape Code 1 (EC1) in the input digit string, the Auxiliary Number Table will be searched to determine
1. If any Escape Code 2's (EC2) have been defined. A special SAS Database Access Method is used for this purpose:
   - If an Auxiliary Number Table search matches to the input digit stream and the name of the Auxiliary Number is different from EC2, then an Escape Code 2 shall not be detected by Digit Analysis.
   - If an Auxiliary Number Table search matches to the input digit stream and the name of the Auxiliary Number is EC2, then an Escape Code 2 shall be detected by Inbound Digit Analysis.
   - If an Escape Code 2 is detected by Digit Analysis, then an Error shall be generated.
   - The check for EC2 has to be done before the check for EC1 in order to exclude that there is no EC2 present in a case where exactly an EC1 is expected. This is necessary, as there are cases where EC1 is a leading sub-string of EC2 (e.g. EC1 =0, EC2=00).
2. If no Escape Code 2 (EC2) is found, then if any Escape Code 1's (EC1) have been defined. A special SAS Database Access Method is used for this purpose:
   - If an Auxiliary Number Table search matches to the input digit stream and the name of the Auxiliary Number is different from EC1, then an Escape Code 1 shall not be detected by Digit Analysis.
   - If an Auxiliary Number Table search matches to the input digit stream and the name of the Auxiliary Number is EC1, then an Escape Code 1 shall be detected by Inbound Digit Analysis.
   - If an Escape Code 1 is detected by Digit Analysis, then the Escape Code 1 shall be removed from the input digit string and stored in the SAS Application Service.

If an Auxiliary Number Table search returns with MATCH, AMBIGUOUS, NO MATCH, or Database Error this result is indicated to the calling procedure.

For the presence of the EC1, only two values are allowed: "Always - Auxiliary" and "Sometimes - Auxiliary". During the configuration of the system it has to be assured that only these two possible values of Auxiliary Number Presence in the Input Digit String Configuration Table can be chosen for EC1.

It is a matter of the SAS Application Service what to do with indications "EC1 MATCH", "EC1 AMBIGUOUS", "EC1 NO MATCH", and possibly generated errors 'Inconsistency: EC1 was expected, but EC2 was present." "EC2 DB Error", "Inconsistency: EC1 not matched but specified as always present." "EC1 DB Error, EC1 Always Present" and "EC1 DB Error, EC1 Sometimes Present". From the perspective of the procedure Analyse EC, the Database Error is treated in the same way as the database result NO MATCH.

### 1.3.1.2.2.4.5 Analyse Escape Code 2 (Escape to Inter-National Network)

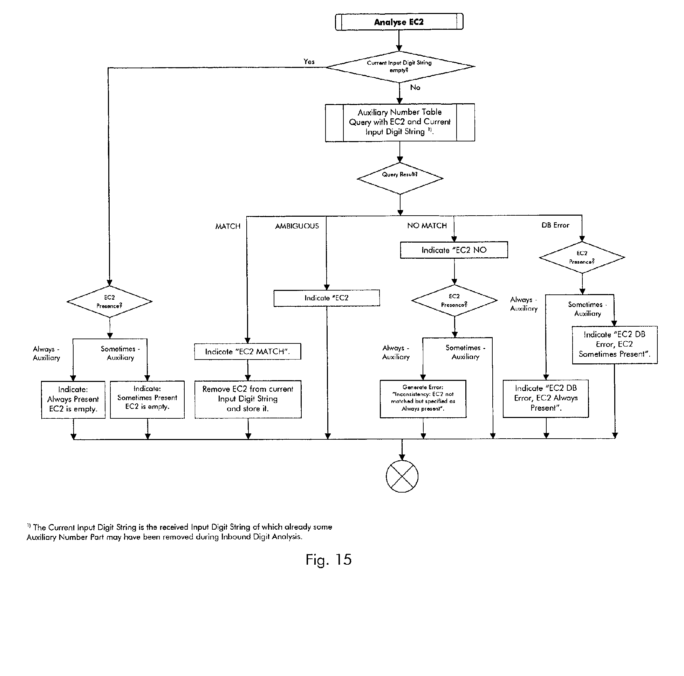

Figure 15 depicts the SDL diagram of Analyse Escape Code 2 (Escape to National Network).

Currently there is only one known possibility where it can be required to search for the presence of an Escape Code 2 (Escape to Inter-National Network):
- In an Input Digit String Definition where the NoAI value is other than "unknown", "national", or "international". This is the customer specific case. Currently, there is no customer and no specific NoAI value known (different from "unknown", "national", or "international") which would imply this property. However, a NoAI of this semantics would imply in this case that always EC2 has to be in the Input Digit String.

When Inbound Digit Analysis is required to search for the presence of an Escape Code 2 (EC2) in the input digit string, the Auxiliary Number Table will be searched to determine If any Escape Code 2's (EC2) have been defined. A special SAS Database Access Method is used for this purpose.

If an Auxiliary Number Table search matches to the input digit stream and the name of the Auxiliary Number is different from EC2, then an Escape Code 2 shall not be detected by Digit Analysis.

If an Auxiliary Number Table search matches to the input digit stream and the name of the Auxiliary Number is EC2, then an Escape Code 2 shall be detected by Inbound Digit Analysis.

If an Escape Code 2 is detected by Digit Analysis, then the Escape Code 2 shall be removed from the input digit string and stored in the SAS Application Service.

It is currently assumed that EC2 is never a leading sub-string of EC1. Therefore, the presence of EC1 does not need to be checked. Should it turn out that this assumption is longer true, then respective modifications have to be made on the SDL for Analyse Escape Code 2.

If an Auxiliary Number Table search returns with MATCH, AMBIGUOUS, NO MATCH or Database Error, this result is indicated to the calling procedure.

For the presence of the EC2, only two values are allowed: "Always - Auxiliary" and "Sometimes - Auxiliary". During the configuration of the system it has to be assured that only these two possible values of Auxiliary Number Presence in the Input Digit String Configuration Table can be chosen for EC2.

It is a matter of the SAS Application Service what to do with the indications "EC2 MATCH", "EC2 AMBIGUOUS", "EC2 NO MATCH", and possibly generated errors "Inconsistency: EC2 not matched but specified as always present", "EC2 DB Error, EC2 Always Present" and "EC2 DB Error, EC2 Sometimes Present". From the perspective of the procedure Analyse SI, the Database Error is treated in the same way as the database result NO MATCH.

### 1.3.1.2.2.4.6 Analyse Country Code

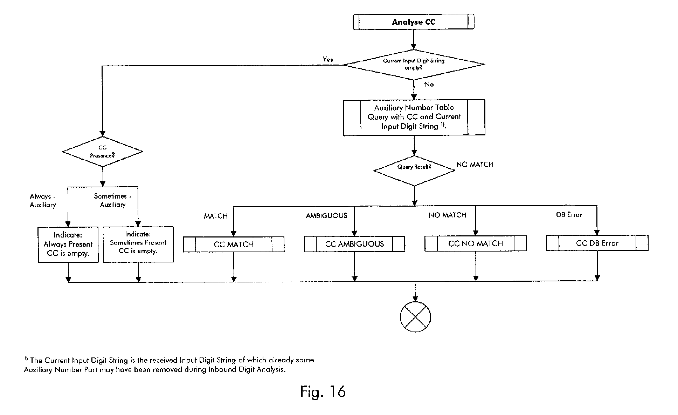

Figure 16 through Figure 20 depict the SDL diagrams of Analyse Country Code.

Figure 16 shows Analyse Country Code.

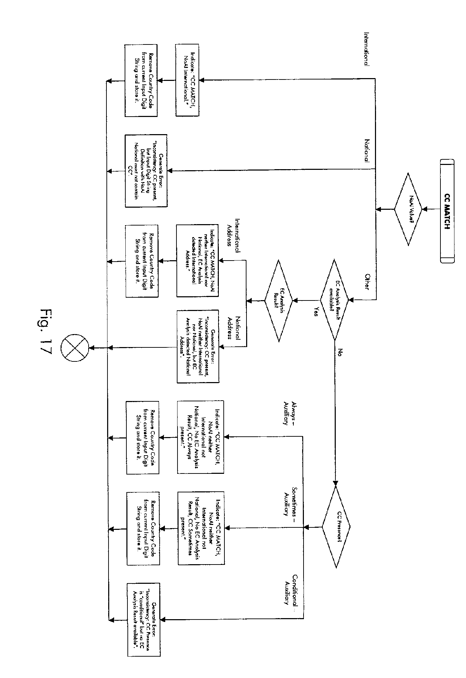

Figure 17 shows CC MATCH.

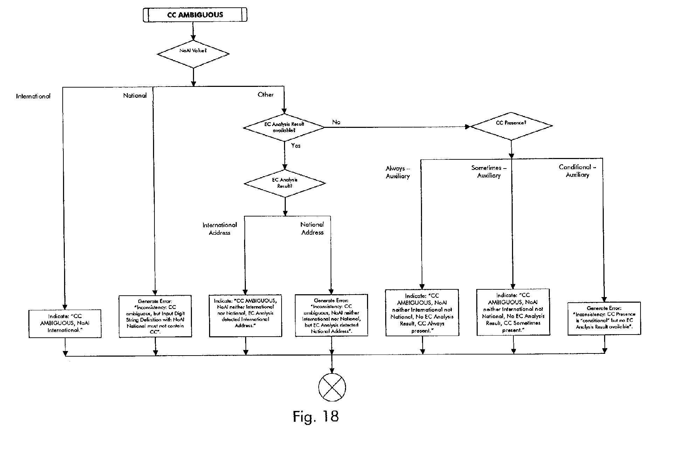

Figure 18 shows CC AMBIGUOUS.

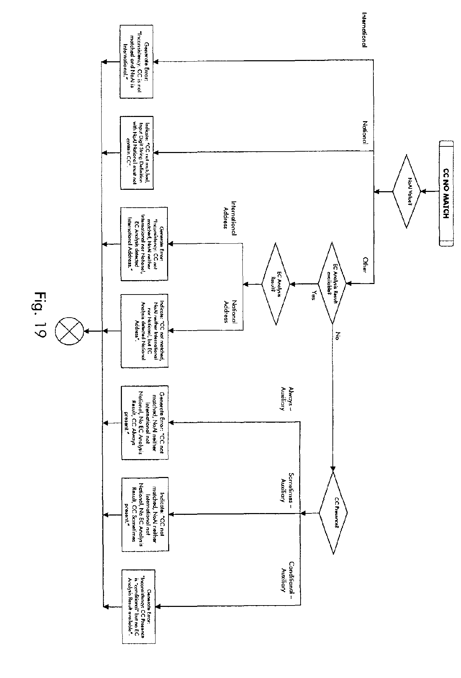

Figure 19 shows CC NO MATCH.

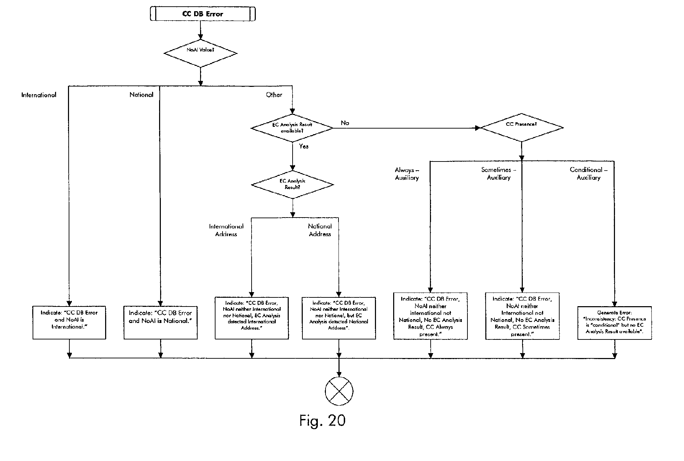

Figure 20 shows CC DB Error.

The presence of the Country Code is either specified by the Input Digit String Definition (presence is either Always or Sometimes), or by means or the EC Analysis Result (the presence of Country Code in the Input Digit String Definition is Conditional). Note: the analysis result of EC1 or EC2 does not have an impact on the presence of CC, as the respective Input Digit String Definitions contain or do not contain explicitly the Country Code with presence Always or Sometimes.

The result of the EC Analysis can have the following values:
- EC MATCH, International Address.
- EC MATCH, National Address.
- EC NO MATCH, National Address.
- EC DB Error, National Address.

For the purpose of being processed by CC Analysis, these four values are mapped into the two values International Address and National Address.

The analysis of the Country Code starts with the comparison whether the input digit string starts with a Country Code specified in the Auxiliary Database. A special SAS Database Access Method is used for this purpose. After the database query, the NoAI Analysis Result is checked and respective actions are taken accordingly.

If an Auxiliary Number Table search matches to the input digit stream and the name of the Auxiliary Number is different from CC, then a Country Code shall not be detected by Inbound Digit Analysis.

If an Auxiliary Number Table search matches to the input digit stream and the name of the Auxiliary Number is CC, then a Country Code shall be detected by Inbound Digit Analysis.

If a Country Code is detected by Inbound Digit Analysis, then the Country Code shall be removed from the input digit string and stored in the SAS Application Service.

If an Auxiliary Number Table search returns with MATCH, AMBIGUOUS, NO MATCH or Database Error, this result is indicated to the calling procedure.

For the presence of the CC, only three values are allowed: "Always - Auxiliary", "Sometimes - Auxiliary" and "Conditional - Auxiliary". During the configuration of the system it has to be assured that only these three possible values of Auxiliary Number Presence in the Input Digit String Configuration Table can be chosen for CC.

It is a matter of the SAS Application Service what to do with the indications and possibly generated errors. From the perspective of the procedure Analyse SI, the Database Error is treated in the same way as the database result NO MATCH.

### International Numbers:

The recognition of the Country Code contained within the input digit sequence is necessary only when the associated NoAI for the digit sequence indicates that it is an International number or EC Analysis detected an International Address. This condition with respect to a number is also called a number in International Form in this specification.

A sequence of digits shall be recognised as being in International Form if the NoAI parameter is set to International Number, e.g. 04h for the NoAI parameter of the SCCP GTAI (ITU-T Q.713), or an equivalent value for an equivalent SS7 parameter.

A sequence of digits shall be recognised as being in International Form if the NoAI parameter (or its equivalent) is set to Unknown, and the EC Analysis detected an International Address.

If the received digit sequence is in International Form and the Country Code in the received digit string has not been provisioned in the definition of the input digit string for a given SAS Application Service, then the Inbound Digit Analysis of this SAS Application Service shall indicate that Country Code did not match. Each SAS Application Service shall define a response action for this case.
Note: this constraint has to be checked during the input of the configuration data items for the Input Digit Strings.

If the received digit sequence is in International Form and the Country Code has been provisioned as a prefix in the definition of the input digit string for a given SAS Application Service, and the Country Code does not match, then the Inbound Digit Analysis of this SAS Application Service shall indicate that Country Code did not match. Each SAS Application Service shall define a response action for this case.

If the received digit sequence is in International Form and the Country Code has been provisioned as a prefix in the definition of the input digit string for a given SAS Application Service, and the Country Code matches, then the digits of the Country Code shall be removed from the input digit string.

### National Numbers:

With national numbers there is no Country Code that is contained within the received digit string. The NoAI (or its equivalent) may explicitly indicate a National digit string, or the EC Analysis may derive this conclusion. A National number is also called a number in National Form in this specification.

A sequence of digits shall be recognised as being in National Form if the NoAI parameter (or its equivalent) is set to Unknown, and the EC Analysis detected a National Address.

### 1.3.1.2.2.4.7 Analyse Mobile Country Code

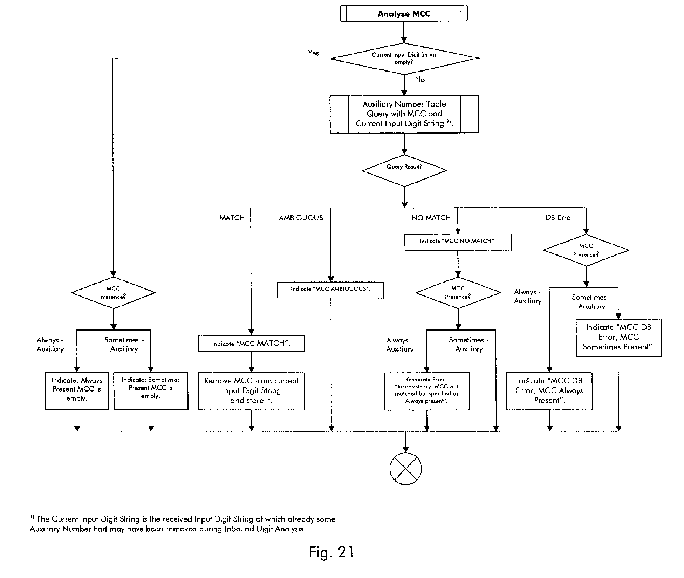

Figure 21 shows Analyse Mobile Country Code.

When Inbound Digit Analysis is required to search for the presence of an Mobile Country Code in the input digit string, the Auxiliary Number Table will be searched to determine if any Mobile Country Code have been defined. A special SAS Database Access Method is used for this purpose.

If an Auxiliary Number Table search matches to the input digit stream and the name of the Auxiliary Number is different from MCC, then a Mobile Country Code shall not be detected by Digit Analysis.

If an Auxiliary Number Table search matches to the input digit stream and the name of the Auxiliary Number is MCC, then a Mobile Country Code shall be detected by Inbound Digit Analysis.

If an Auxiliary Number Table search returns with MATCH, AMBIGUOUS, NO MATCH or Database Error, this result is indicated to the calling procedure.

For the presence of the MCC, only two values are allowed: "Always - Auxiliary" and "Sometimes - Auxiliary". During the configuration of the system it has to be assured that only these two possible values of Auxiliary Number Presence in the Input Digit String Configuration Table can be chosen for MCC.

If a Mobile Country Code is detected by Inbound Digit Analysis, then the Mobile Country Code shall be removed from the input digit string and stored in the SAS Application Service.

It is a matter of the SAS Application Service what to do with the indications "MCC MATCH", "MCC AMBIGUOUS", "MCC NO MATCH", and possibly generated errors "Inconsistency: MCC not matched but specified as always present", "MCC DB Error, MCC Always Present" and "MCC DB Error, MCC Sometimes Present". From the perspective of the procedure Analyse MCC, the Database Error is treated in the same way as the database result NO MATCH.

### 1.3.1.2.2.4.8 Analyse Inter-Network Routing Number

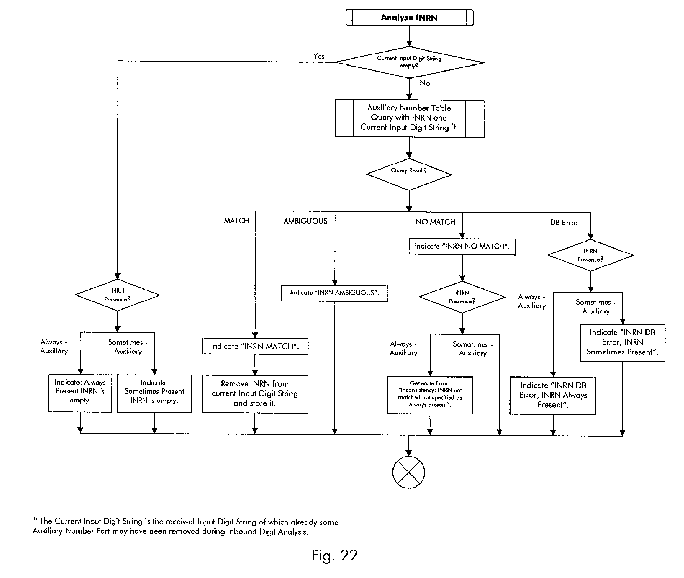

Figure 22 depicts the SDL diagram of Analyse Inter-Network Routing Number.

Figure 22 shows Analyse Inter-Network Routing Number.

When Inbound Digit Analysis is required to search for the presence of an Inter-Network Routing Number in the input digit string, the Auxiliary Number Table will be searched to determine if any Inter-Network Routing Numbers have been defined. A special SAS Database Access Method is used for this purpose.

If an Auxiliary Number Table search matches to the input digit stream and the name of the Auxiliary Number is different from INRN, then an Inter-Network Routing Number shall not be detected by Inbound Digit Analysis.

If an Auxiliary Number Table search matches to the input digit stream and the name of the Auxiliary Number is INRN, then an Inter-Network Routing Number shall be detected by Inbound Digit Analysis.

Note: the detection of a Inter-Network Routing Number is one of the entry criteria for Loop Detection, if Loop Detection is enabled by a given SAS Application Service.

If an Auxiliary Number Table search returns with MATCH, AMBIGUOUS, NO MATCH or Database Error, this result is indicated to the calling procedure.

For the presence of the INRN, only two values are allowed: "Always - Auxiliary" and "Sometimes - Auxiliary". During the configuration of the system it has to be assured that only these two possible values of Auxiliary Number Presence in the Input Digit String Configuration Table can be chosen for INRN.

If an Inter-Network Routing Number is detected by Inbound Digit Analysis, then the Inter-Network Routing Number shall be removed from the input digit string and stored in the SAS Application Service.

It is a matter of the SAS Application Service what to do with the indications "INRN MATCH", "INRN AMBIGUOUS", "INRN NO MATCH", and possibly generated errors inconsistency: INRN not matched but specified as always present", "INRN DB Error, INRN Always Present" and "INRN DB Error, INRN Sometimes Present". From the perspective of the procedure Analyse INRN, the Database Error is treated in the same way as the database result NO MATCH.

### 1.3.1.2.2.4.9 Analyse Voice Mail Service Centre - Internal Network Prefix

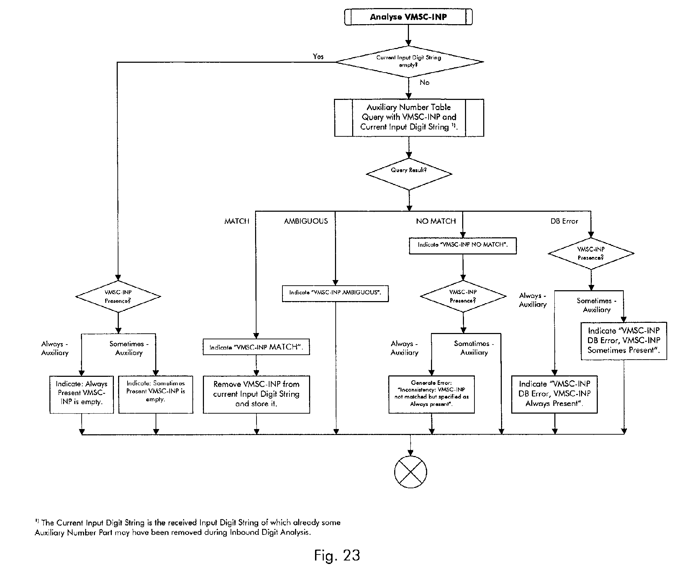

Figure 23 shows Analyse Voice Mail Service Centre - Internal Network Prefix.

When Inbound Digit Analysis is required to search for the presence of an Internal Network Prefix (such as a Voice Mail Prefix) in the input digit string, the Auxiliary Number Table will be searched to determine if any Internal Network Prefixes have been defined. A special SAS Database Access Method is used for this purpose.

If an Auxiliary Number Table search matches to the input digit stream and the name of the Auxiliary Number is different from VMSC-INP, then a Voice Mail Service Centre - Internal Network Prefix shall not be detected by Digit Analysis.

If an Auxiliary Number Table search matches to the input digit stream and the name of the Auxiliary Number is VMSC-INP, then a Voice Mail Service Centre - Internal Network Prefix shall be detected by Inbound Digit Analysis.

If an Auxiliary Number Table search returns with MATCH, AMBIGUOUS, NO MATCH or Database Error, this result is indicated to the calling procedure.

For the presence of the VMSC-INP, only two values are allowed: "Always - Auxiliary" and "Sometimes - Auxiliary". During the configuration of the system it has to be assured that only these two possible values of Auxiliary Number Presence in the Input Digit String Configuration Table can be chosen for VMSC-INP.

If a Voice Mail Service Centre - Internal Network Prefix is detected by Inbound Digit Analysis, then the Voice Mail Service Centre - Internal Network Prefix shall be removed from the input digit string and stored in the SAS Application Service.

It is a matter of the SAS Application Service what to do with the indications "VMSC-INP MATCH", "VMSC-INP AMBIGUOUS", "VMSC-INP NO MATCH", and possibly generated errors "Inconsistency: VMSC-INP not matched but specified as always present", "VMSC-INP DB Error, VMSC-INP Always Present" and "VMSC-INP DB Error, VMSC-INP Sometimes Present". From the perspective of the procedure Analyse VMSC-INP, the Database Error is treated in the same way as the database result NO MATCH.

### 1.3.1.2.2.4.10 Analyse Generic Access Code

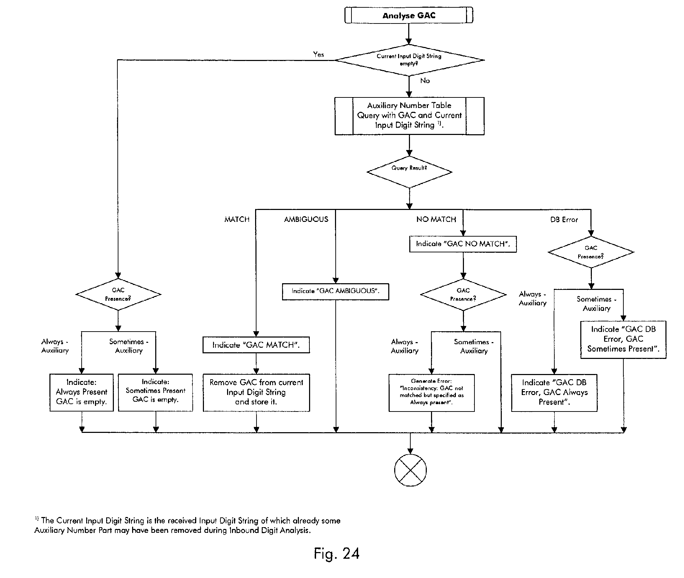

Figure 24 depicts the SDL diagram of Analyse Generic Access Code.

When Inbound Digit Analysis is required to search for the presence of a Generic Access Code in the input digit string, the Auxiliary Number Table will be searched to determine if any Generic Access Codes have been defined. A special SAS Database Access Method is used for this purpose.

If an Auxiliary Number Table search matches to the input digit stream and the name of the Auxiliary Number is different from GAC, then a Generic Access Code shall not be detected by Inbound Digit Analysis.

If an Auxiliary Number Table search matches to the input digit stream and the name of the Auxiliary Number is GAC, then an Generic Access Code shall be detected by Inbound Digit Analysis.

If an Auxiliary Number Table search returns with MATCH, AMBIGUOUS, NO MATCH or Database Error, this result is indicated to the calling procedure.

For the presence of the GAC, only one value is allowed: "Always - Auxiliary". During the configuration of the system it has to be assured that only single possible value of Auxiliary Number Presence in the Input Digit String Configuration Table can be chosen for VMSC-INP.

If a Generic Access Code is detected by Inbound Digit Analysis, then this is indicated to the SAS Application Service.

Note: the actions taken upon the detection of a GAC are defined within the scope of each SAS Application Service.

It is a matter of the SAS Application Service what to do with the indications "GAC MATCH", "GAC AMBIGUOUS", "GAC NO MATCH", and possibly generated errors "Inconsistency: GAC not matched but specified as always present", "GAC DB Error, GAC Always Present" and "GAC DB Error, GAC Sometimes Present". From the perspective of the procedure Analyse GAC, the Database Error is treated in the same way as the database result NO MATCH.

### 1.3.1.2.2.4.11 Analyse National Destination Code

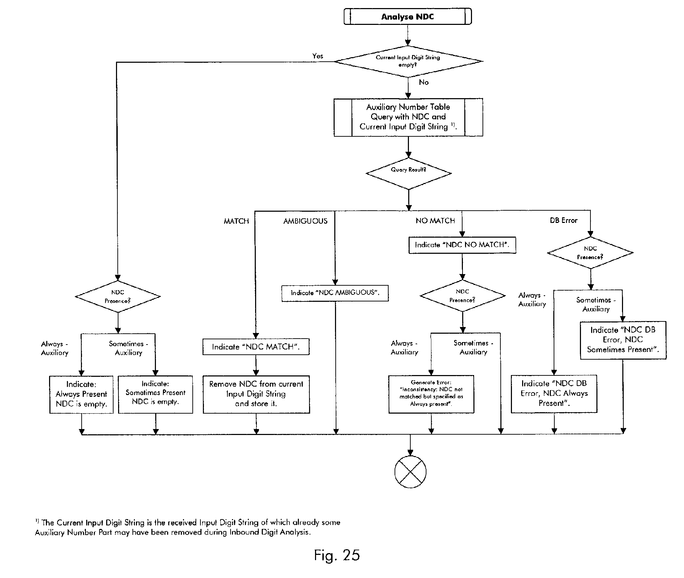

Figure 25 depicts the SDL diagram of Analyse National Destination Code.

When Inbound Digit Analysis is required to search for the presence of an National Destination Code in the input digit string, the Auxiliary Number Table will be searched to determine if any National Destination Codes have been defined. A special SAS Database Access Method is used for this purpose.

If an Auxiliary Number Table search matches to the input digit stream and the name of the Auxiliary Number is different from NDC, then an National Destination Code shall not be detected by Inbound Digit Analysis.

If an Auxiliary Number Table search matches to the input digit stream and the name of the Auxiliary Number is NDC, then an National Destination Code shall be detected by Inbound Digit Analysis.

If an Auxiliary Number Table search returns with MATCH, AMBIGUOUS, NO MATCH or Database Error, this result is indicated to the calling procedure.

For the presence of the NDC, only two values are allowed: "Always - Core" and "Sometimes - Core". During the configuration of the system it has to be assured that only these two possible values of Auxiliary Number Presence in the Input Digit String Configuration Table can be chosen for NDC.

If a National Destination Code is detected by Inbound Digit Analysis, then the National Destination Code shall be removed from the input digit string and stored in the SAS Application Service.

It is a matter of the SAS Application Service what to do with the indications "NDC MATCH", "NDC AMBIGUOUS", "NDC NO MATCH", and possibly generated errors inconsistency: NDC not matched but specified as always present", "NDC DB Error, NDC Always Present" and "NDC DB Error, NDC Sometimes Present". From the perspective of the procedure Analyse NDC, the Database Error is treated in the same way as the database result NO MATCH.

### 1.3.1.2.2.4.12 Analyse Mobile Network Code

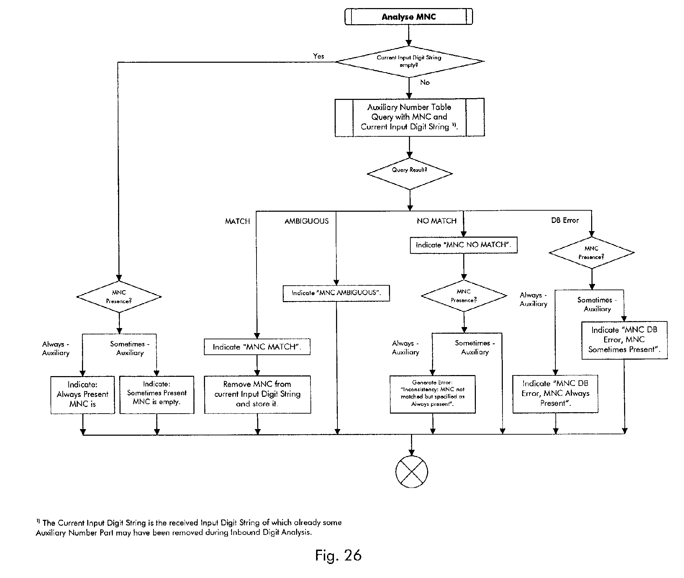

Figure 26 depicts the SDL diagram of Analyse Mobile Network Code.

When Inbound Digit Analysis is required to search for the presence of an Mobile Network Code in the input digit string, the Auxiliary Number Table will be searched to determine if any Mobile Network Codes have been defined. A special SAS Database Access Method is used for this purpose.

If an Auxiliary Number Table search matches to the input digit stream and the name of the Auxiliary Number is different from MNC, then an Mobile Network Code shall not be detected by Inbound Digit Analysis.

If an Auxiliary Number Table search matches to the input digit stream and the name of the Auxiliary Number is MNC, then an Mobile Network Code shall be detected by Inbound Digit Analysis.

If an Auxiliary Number Table search returns with MATCH, AMBIGUOUS, NO MATCH or Database Error, this result is indicated to the calling procedure.

For the presence of the MNC, only two values are allowed: "Always - Core" and "Sometimes - Core". During the configuration of the system it has to be assured that only these two possible values of Auxiliary Number Presence in the Input Digit String Configuration Table can be chosen for MNC.

If a Mobile Network Code is detected by Inbound Digit Analysis, then the Mobile Network Code shall be removed from the input digit string and stored in the SAS Application Service.

It is a matter of the SAS Application Service what to do with the indications "MNC MATCH", "MNC AMBIGUOUS", "MNC NO MATCH", and possibly generated errors "Inconsistency: MNC not matched but specified as always present", "MNC DB Error, MNC Always Present" and "MNC DB Error, MNC Sometimes Present". From the perspective of the procedure Analyse MNC, the Database Error is treated in the same way as the database result NO MATCH.

### 1.3.1.2.2.4.13 Analyse Network Code

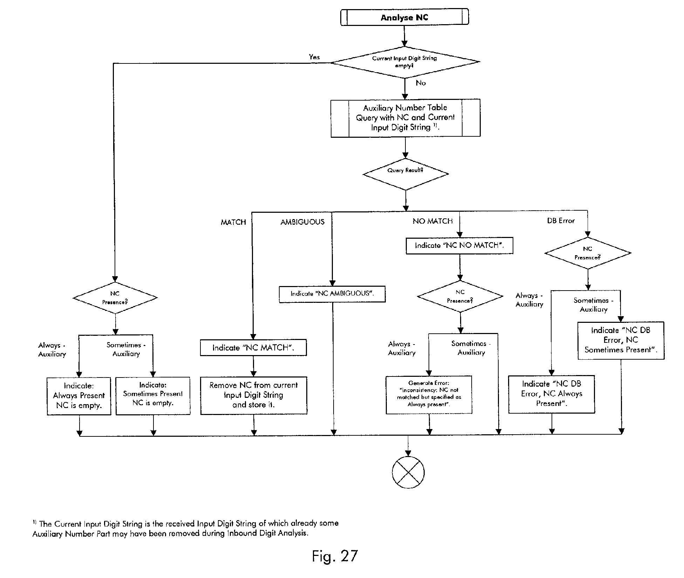

Figure 27 depicts the SDL diagram of Analyse Network Code.

When Inbound Digit Analysis is required to search for the presence of an Network Code in the input digit string, the Auxiliary Number Table will be searched to determine if any Network Codes have been defined. A special SAS Database Access Method is used for this purpose.

If an Auxiliary Number Table search matches to the input digit stream and the name of the Auxiliary Number is different from NC, then an Network Code shall not be detected by Inbound Digit Analysis.

If an Auxiliary Number Table search matches to the input digit stream and the name of the Auxiliary Number is NC, then an Network Code shall be detected by Inbound Digit Analysis.

If an Auxiliary Number Table search returns with MATCH, AMBIGUOUS, NO MATCH or Database Error, this result is indicated to the calling procedure.

For the presence of the NC, only two values are allowed: "Always - Core" and "Sometimes - Core". During the configuration of the system it has to be assured that only these two possible values of Auxiliary Number Presence in the Input Digit String Configuration Table can be chosen for NC.

If a Network Code is detected by Inbound Digit Analysis, then the Network Code shall be removed from the input digit string and stored in the SAS Application Service.

It is a matter of the SAS Application Service what to do with the indications "NC MATCH", "NC AMBIGUOUS", "NC NO MATCH", and possibly generated errors inconsistency: NC not matched but specified as always present", "NC DB Error, NC Always Present" and "NC DB Error, NC Sometimes Present". From the perspective of the procedure Analyse NC, the Database Error is treated in the same way as the database result NO MATCH.

### 1.3.1.2.2.4.14 Analyse Nat1

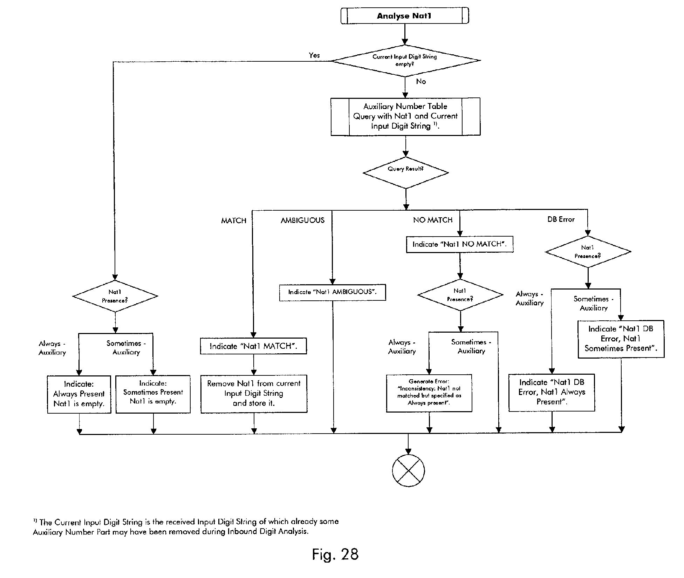

Figure 28 depicts the SDL diagram of Analyse Nat1.

When Inbound Digit Analysis is required to search for the presence of Nat1 in the input digit string, the Auxiliary Number Table will be searched to determine if any Nat1 have been defined. A special SAS Database Access Method is used for this purpose.

If an Auxiliary Number Table search matches to the input digit stream and the name of the Auxiliary Number is different from Nat1, then Nat1 shall not be detected by Inbound Digit Analysis.

If an Auxiliary Number Table search matches to the input digit stream and the name of the Auxiliary Number is Nat1, then Nat1 shall be detected by Inbound Digit Analysis.

If an Auxiliary Number Table search returns with MATCH, AMBIGUOUS, NO MATCH or Database Error, this result is indicated to the calling procedure.

For the presence of Nat1, only two values are allowed: "Always - Core" and "Sometimes - Core". During the configuration of the system it has to be assured that only these two possible values of Auxiliary Number Presence in the Input Digit String Configuration Table can be chosen for Nat1.

If Nat1 is detected by Inbound Digit Analysis, then Nat1 shall be removed from the input digit string and stored in the SAS Application Service.

It is a matter of the SAS Application Service what to do with the indications "Nat1 MATCH", "Nat1 AMBIGUOUS", "Nat1 NO MATCH", and possibly generated errors 'Inconsistency: Nat1 not matched but specified as always present", "Nat1 DB Error, Nat1 Always Present" and "Nat1 DB Error, Nat1 Sometimes Present". From the perspective of the procedure Analyse Nat1, the Database Error is treated in the same way as the database result NO MATCH.

### 1.3.1.2.2.4.15 Analyse Voice Mail Service Centre - Internal Network Infix

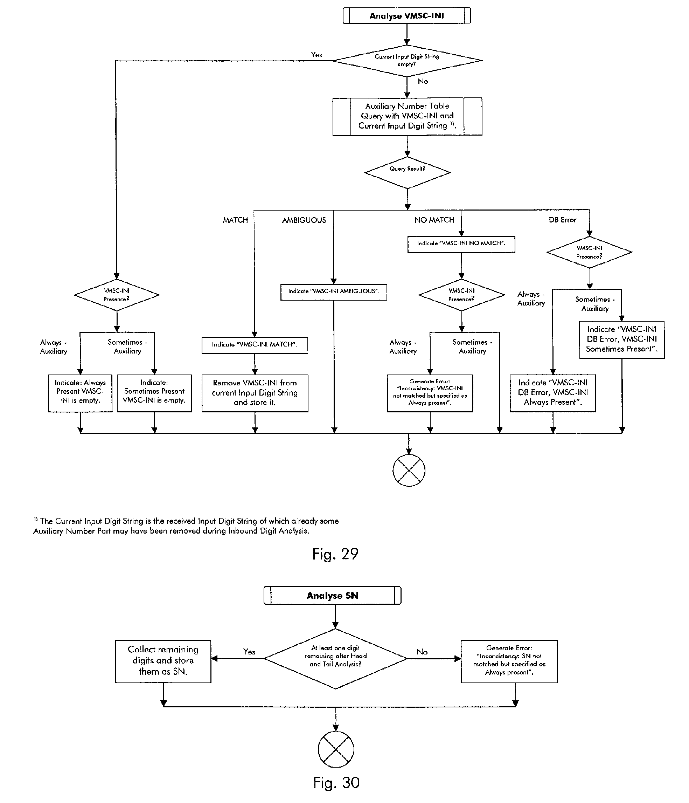

Figure 29 shows Analyse Voice Mail Service Centre - Internal Network Infix.

When Inbound Digit Analysis is required to search for the presence of an Internal Network Infix (such as a Voice Mail Infix) in the input digit string, the Auxiliary Number Table will be searched to determine if any Internal Network Infix have been defined. A special SAS Database Access Method is used for this purpose.

If an Auxiliary Number Table search matches to the input digit stream and the name of the Auxiliary Number is different from VMSC-INI, then a Voice Mail Service Centre - Internal Network Infix shall not be detected by Inbound Digit Analysis.

If an Auxiliary Number Table search matches to the input digit stream and the name of the Auxiliary Number is VMSC-INI, then a Voice Mail Service Centre - Internal Network Infix shall be detected by Inbound Digit Analysis.

In an Voice Mail Service Centre - Internal Network Infix is detected by Inbound Digit Analysis, then the Voice Mail Service Centre - Internal Network Infix shall be removed from the input digit string and stored in the SAS Application Service.

If an Auxiliary Number Table search returns with MATCH, AMBIGUOUS, NO MATCH or Database Error, this result is indicated to the calling procedure.

For the presence of VMSC-INI, only two values are allowed: "Always - Auxiliary" and "Sometimes - Auxiliary". During the configuration of the system it has to be assured that only these two possible values of Auxiliary Number Presence in the Input Digit String Configuration Table can be chosen for VMSC-INI.

It is a matter of the SAS Application Service what to do with the indications "VMSC-INI MATCH", "VMSC-INI AMBIGUOUS-, "VMSC-INI NO MATCH", and possibly generated errors "Inconsistency: VMSC-INI not matched but specified as always present", "VMSC-INI DB Error, VMSC-INI Always Present" and "VMSC-INI DB Error, VMSC-INI Sometimes Present". From the perspective of the procedure Analyse VMSC-INI, the Database Error is treated in the same way as the database result NO MATCH.

### 1.3.1.2.2.4.16 Analyse Subscriber Number

Figure 30 depicts the SDL diagram of Analyse Subscriber Number.

When Inbound Digit Analysis is required to search for the presence of a Subscriber Number in the input digit string, it checks whether there are remaining digits in the current Input Digit String.

If there are remaining digits in the current Input Digit String, these digits are collected and stored at a place identified by SN.

If there are no remaining digits in the current Input Digit String, an error is generated, as a configured SN has to be always present.

For the presence of the SN, only one value is allowed: "Always - Core". During the configuration of the system it has to be assured that only this single possible values of Auxiliary Number Presence in the Input Digit String Configuration Table can be chosen for SN.

### 1.3.1.2.2.4.17 Analyse Mobile Subscriber Identification Number

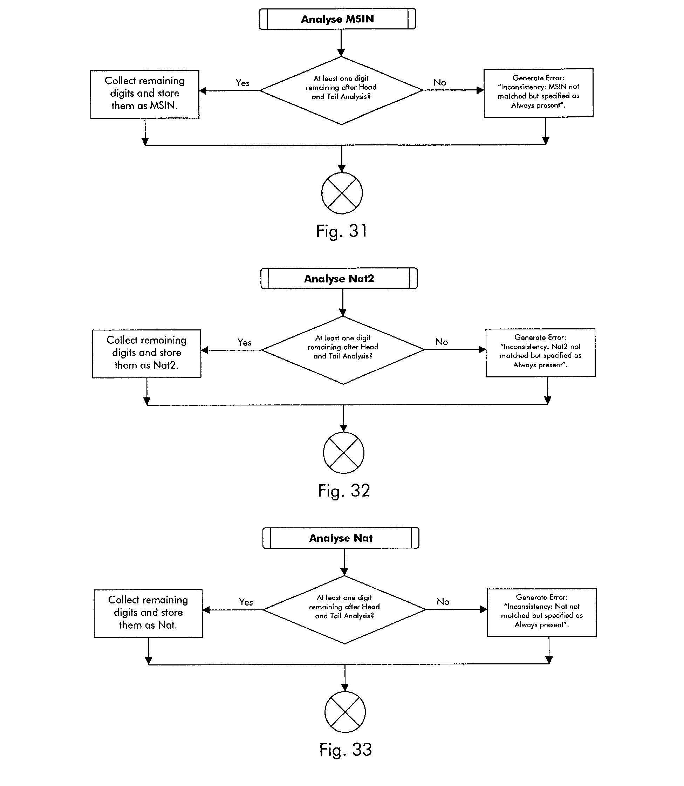

Figure 31 shows Analyse Mobile Subscriber Identification Number.

When Inbound Digit Analysis is required to search for the presence of a Mobile Subscriber Identification Number in the input digit string, it checks whether there are remaining digits in the current Input Digit String.

If there are remaining digits in the current Input Digit String, these digits are collected and stored at a place identified by MSIN.

If there are no remaining digits in the current Input Digit String, an error is generated, as a configured MSIN has to be always present.

For the presence of the MSIN, only one value is allowed: "Always - Core". During the configuration of the system it has to be assured that only this single possible values of Auxiliary Number Presence in the Input Digit String Configuration Table can be chosen for MSIN.

### 1.3.1.2.2.4.18 Analyse Nat2

Figure 32 depicts the SDL diagram of Analyse Nat2.

When Inbound Digit Analysis is required to search for the presence of Nat2 in the input digit string, it checks whether there are remaining digits in the current Input Digit String.

If there are remaining digits in the current Input Digit String, these digits are collected and stored at a place identified by Nat2.

If there are no remaining digits in the current Input Digit String, an error is generated, as a configured Nat2 has to be always present.

For the presence of Nat2, only one value is allowed: "Always - Core". During the configuration of the system it has to be assured that only this single possible values of Auxiliary Number Presence in the Input Digit String Configuration Table can be chosen for Nat2.

### 1.3.1.2.2.4.19 Analyse Nat

Figure 33 depicts the SDL diagram of Analyse Nat.

When Inbound Digit Analysis is required to search for the presence of Nat in the input digit string, it checks whether there are remaining digits in the current Input Digit String.

If there are remaining digits in the current Input Digit String, these digits are collected and stored at a place identified by Nat.

If there are no remaining digits in the current Input Digit String, an error is generated, as a configured Nat has to be always present.

For the presence of Nat, only one value is allowed: "Always - Core". During the configuration of the system it has to be assured that only this single possible values of Auxiliary Number Presence in the Input Digit String Configuration Table can be chosen for Nat.

### 1.3.1.2.2.4.20 Analyse BigCore

Figue 34 depicts the SDL diagram of Analyse BigCore.

When Inbound Digit Analysis is required to search for the presence of BigCore in the input digit string, it checks whether there are remaining digits in the current Input Digit String.

If there are remaining digits in the current Input Digit String, these digits are collected and stored at a place identified by BigCore.

If there are no remaining digits in the current Input Digit String, an error is generated, as a configured BigCore has to be always present.

For the presence of BigCore, only one value is allowed: "Always - Core". During the configuration of the system it has to be assured that only this single possible values of Auxiliary Number Presence in the Input Digit String Configuration Table can be chosen for BigCore.

### 1.4 Configuration Data For SAS Inbound Digit Analysis

The following configuration data items are present within many or all SAS Application Services, however, each SAS Application Service may have different values for the respective configuration data items.

Each SAS Application Service shall have a configuration data item, which specifies the allowed values of NoAI for each protocol element. Each input digit string is associated to a protocol parameter from where it is received. It is even possible to associate more than one input digit string to a given protocol parameter. Table 8 presents a table defining the allowed values of NoAI for each protocol element.

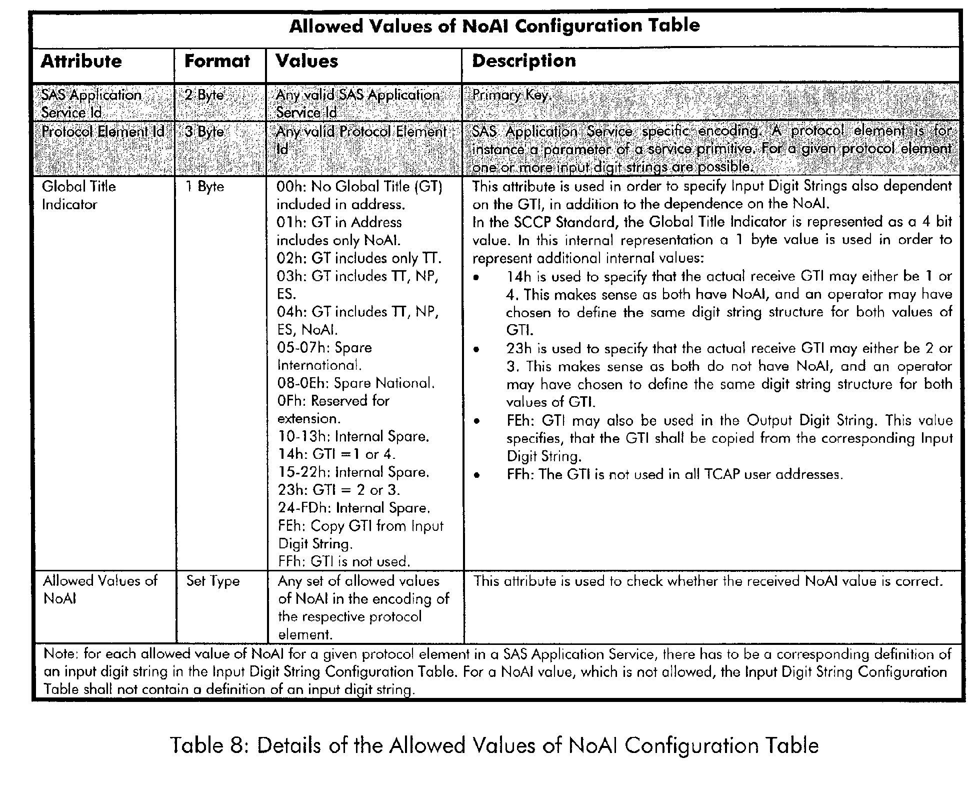

Each SAS Application Service shall have a configuration data item, which specifies the structure of each possible input digit string on the basis of its general abstract structure. Each input digit string is associated to a protocol parameter from where it is received. It is even possible to associate more than one input digit string to a given protocol parameter. The structure of the input digit string is specified by the list of its auxiliary numbers. Table 9 presents the information necessary to specify an input digit string. Table 10 specifies the mapping of the input digit strings to the protocol element.

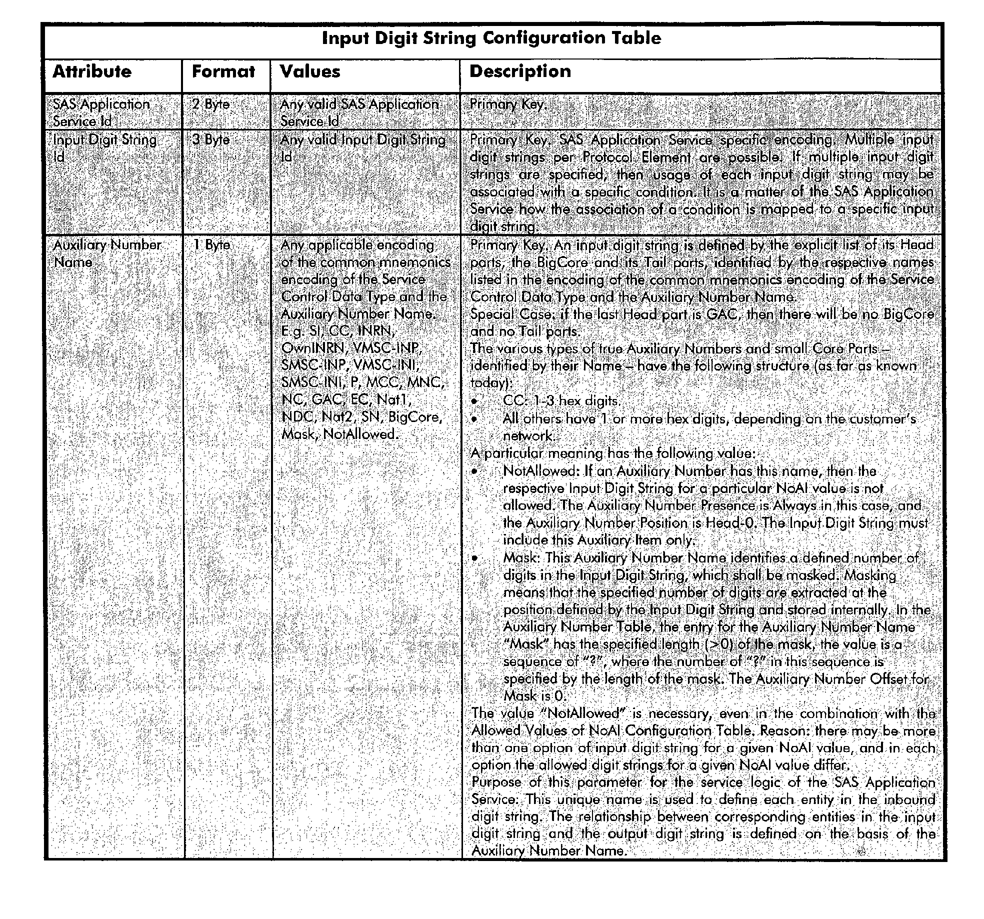

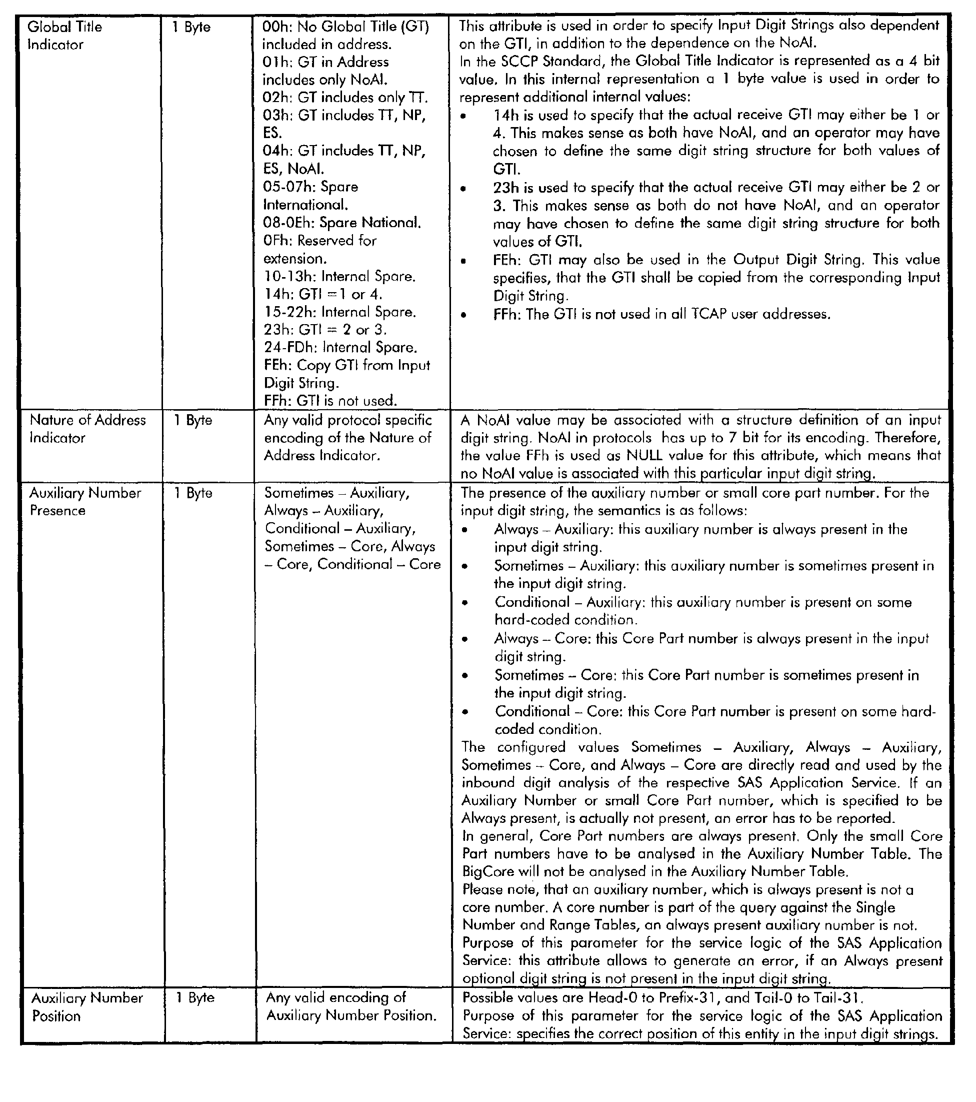

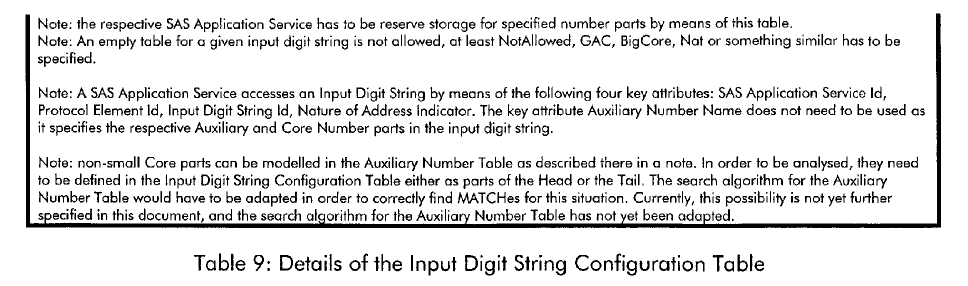

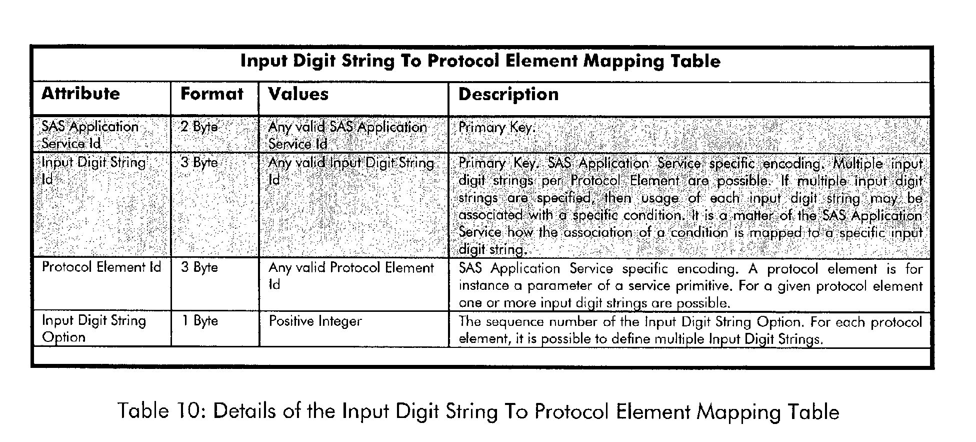

### Configuration Items for the Database Queries:

Each SAS Application Service shall have a configuration data item, which specifies for each possible input digit string, whether the national specific part of this input digit string has always the same fixed defined length, or is of variable length.
It is assumed that the code of the SAS Application Service maps each input digit string to a respective protocol parameter.

The name of this configuration data item is SasAppliationServicelnputNatLength. The syntax is:
SasAppliationServicelnputNatLength = SasAppliationServiceld, InputDigitStringld, NatLength.
SasAppliationServiceld is any SAS Application Service Id (details to be defined).
InputDigitStringld is any Input Digit String Id (details to be defined).
NatLength is a non-negative integer value, 0 represents variable length, any other value specifies the respective fixed length.

The NatLength influences the way in which a SAS Application Service handles database queries in the Service Decision phase of a SAS Application Service.

Each SAS Application Service shall have a configuration data item, which specifies for each possible input digit string, whether it is allowed to request additional digits for the national specific part of this input digit string, or not. In this specification, it is assumed that requesting of additional digits is only possible with single digits dialling, and only not possible for block dialling.
It is also assumed in this specification that requesting of additional digits is not necessary for Auxiliary Numbers. It is assumed that the code of the SAS Application Service maps each input digit string to a respective protocol parameter.

The name of this configuration data item is SasAppliationServicelnputNatRequestAdditionalDigitsAllowed. The syntax is:
SasAppliationServicelnputNatRequestAdditionalDigitsAllowed = SasAppliationServiceld, InputDigitStringld, NatRequestAdditionalDigitsAllowed.
SasAppliationServiceld is any SAS Application Service Id (details to be defined).
InputDigitStringld is any Input Digit String Id (details to be defined).
NatRequestAdditionalDigitsAllowed is an enumerated data type with values YES and NO.

The NatRequestAdditionalDigitsAllowed influences the way in which a SAS Application Service handles database queries in the Service Decision phase of a SAS Application Service.

## Claims

1. Method to perform an inbound message analysis for a SAS application service, comprising the steps of:
performing an application specific inbound protocol check,
performing a NoAI (Nature of Address Indicator) analysis using a NoAI configuration table,
performing an inbound digit anaylsis using an input digit string configuration table.

2. Method, as set forth in claim 1, comprising the further step of performing a GTI (Global Title Indicator) analysis using the NoAI configuration table before performing the inbound digit anaylsis.

3. Method, as set forth in claim 1, wherein the inbound digit analysis serves to analyze the called ot the calling party address, and wherein the input digit string configuration table includes at least two of the following parameters: SAS Application Service Id, Input Digit String Id, Auxiliary Number Name, Global Title Indicator, Nature of Address Indicator, Auxiliary Number Presence, Auxiliary Number Position.

4. Method, as set forth in claim 3, wherein allowed Auxiliary Number Names are at least two of the following: service indicator, country code, internetwork routing number, internal network prefix, complete national significant portion of the number, internal network infix, and general access code.

5. Method, as set forth in claim 1, wherein the inbound digit analysis includes a Head Analysis, a Tail Analysis if Tail Part present, a BigCore Analysis if BigCore Part present, and a concatenation of all found Core Parts.

6. Method to perform an analysis for a SAS application service, comprising the steps of:
performing an inbound message analysis according to the method as set forth in claim 1,
performing a Service Decision,
performing an Outbound Message Synthesis.

7. Signaling application server (SAS), comprising at least one processor, at least one database and at least one processing software for processing at least one application service request, wherein the at least one processing software is programmed in such a way that identifying and processing at least one application service request is enabled, and wherein processing a SAS application service, comprises the steps of:
performing an inbound message analysis according to the method as set forth in claim 1,
performing a Service Decision including a database search,
performing an Outbound Message Synthesis.

8. SS7 signaling server for routing SS7 links, including a signaling transfer point (STP), and a signaling application server (SAS),
wherein the STP has at least one external interface to connect the STP via at least one SS7 link to at least one telecommunications unit, and an internal interface to connect the STP to the SAS,
wherein the SAS comprises at least one processor, at least one database and at least one processing software for processing at least one application service request, wherein processing a SAS application service, comprises the steps of:
performing an inbound message analysis according to the method as set forth in claim 1,
performing a Service Decision,
performing an Outbound Message Synthesis, and
wherein the STP is capable to process incoming SS7 messages, to identify a single application service request in one incoming SS7 message, to provide the identified single application service request to the SAS for further processing.
